(19) Europäisches Patentamt
European Patent Office
Office européen des brevets

(11) **EP 3 271 772 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
***G02B 21/10*** *(2006.01)* ***G02B 21/16*** *(2006.01)*
***G02B 21/36*** *(2006.01)*

(21) Anmeldenummer: **16709439.0**

(22) Anmeldetag: **11.03.2016**

(86) Internationale Anmeldenummer:
**PCT/EP2016/055235**

(87) Internationale Veröffentlichungsnummer:
**WO 2016/146503 (22.09.2016 Gazette 2016/38)**

(54) **VERFAHREN UND ANORDNUNG ZUR LICHTBLATTMIKROSKOPISCHEN UNTERSUCHUNG EINER PROBE**

METHOD AND ASSEMBLY FOR LIGHT SHEET MICROSCOPIC ANALYSIS OF A SAMPLE

PROCÉDÉ ET ENSEMBLE D'ANALYSE D'UN ÉCHANTILLON PAR MICROSCOPIE À NAPPE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2015 DE 102015103802**

(43) Veröffentlichungstag der Anmeldung:
**24.01.2018 Patentblatt 2018/04**

(73) Patentinhaber: **Carl Zeiss Microscopy GmbH 07745 Jena (DE)**

(72) Erfinder:
• **LIPPERT, Helmut**
  **07745 Jena (DE)**
• **KAUFHOLD, Tobias**
  **07749 Jena (DE)**
• **KALKBRENNER, Thomas**
  **07745 Jena (DE)**
• **SIEBENMORGEN, Joerg**
  **07743 Jena (DE)**

(74) Vertreter: **Patentanwälte Geyer, Fehners & Partner mbB**
**Sellierstrasse 1**
**07745 Jena (DE)**

(56) Entgegenhaltungen:
WO-A1-2013/010151    US-A1- 2013 286 181

• B.-C. CHEN ET AL: "Lattice light-sheet microscopy: Imaging molecules to embryos at high spatiotemporal resolution", SCIENCE, Bd. 346, Nr. 6208, 24. Oktober 2014 (2014-10-24), Seiten 1257998-1257998, XP055277103, US ISSN: 0036-8075, DOI: 10.1126/science.1257998 & B.-C. CHEN ET AL: "Lattice light-sheet microscopy: Imaging molecules to embryos at high spatiotemporal resolution", SCIENCE, Bd. 346, Nr. 6208, 23. Oktober 2014 (2014-10-23), Seiten 1257998-1257998, XP055277112, US ISSN: 0036-8075, DOI: 10.1126/science.1257998
• KAVYA MOHAN ET AL: "Three Dimensional Fluorescence Imaging Using Multiple Light-Sheet Microscopy", PLOS ONE, Bd. 9, Nr. 6, 9. Juni 2014 (2014-06-09), Seite e96551, XP055277114, DOI: 10.1371/journal.pone.0096551
• DAN DAN ET AL: "DMD-based LED-illumination Super-resolution and optical sectioning microscopy", SCIENTIFIC REPORTS, Bd. 3, 23. Januar 2013 (2013-01-23), XP055277118, DOI: 10.1038/srep01116

EP 3 271 772 B1

**Beschreibung**

**Gebiet der Erfindung**

Die Erfindung betrifft ein Verfahren zur lichtblattmikroskopischen Untersuchung einer Probe und behandelt unter anderem das Problem der Analyse von Proben, die mit mehreren Farbstoffen markiert sind.

**Stand der Technik**

Die Untersuchung biologischer Proben, bei der die Beleuchtung der Probe mit einem Lichtblatt erfolgt, dessen Ebene - die Lichtblattebene - die optische Achse der Detektion - die Detektionsrichtung - in einem von Null verschiedenen Winkel schneidet, hat in jüngster Zeit an Bedeutung gewonnen. Üblicherweise schließt die Lichtblattebene dabei mit der Detektionsrichtung, die in der Regel der optischen Achse des Detektionsobjektivs entspricht, einen von Null verschiedenen, oft - jedoch nicht zwingend - einen rechten Winkel ein. Solche Untersuchungsverfahren werden überwiegend in der Fluoreszenzmikroskopie eingesetzt und unter dem Begriff LSFM (*Light Sheet Fluorescence Microscopy*) zusammengefasst. Ein Beispiel ist das in der DE 102 57 423 A1 und der darauf aufbauenden WO 2004/0535558 A1 beschriebene und als SPIM (*Selective Plane Illumination Microscopy*) bezeichnete Verfahren, mit dem sich in relativ kurzer Zeit räumliche Aufnahmen auch dickerer Proben erstellen lassen: Auf der Basis von optischen Schnitten kombiniert mit einer Relativbewegung in einer Richtung senkrecht zur Schnittebene ist eine bildliche/räumlich ausgedehnte Darstellung der Probe möglich.

Gegenüber anderen etablierten Verfahren wie der konfokalen Laser-Scanning-Mikroskopie oder der Zwei-Photonen-Mikroskopie weisen die LSFM-Verfahren mehrere Vorzüge auf. Da die Detektion im Weitfeld erfolgen kann, lassen sich größere Probenbereiche in kurzer Zeit erfassen. Zwar ist die Auflösung etwas geringer als bei der konfokalen Laser-Scanning-Mikroskopie, jedoch lassen sich mit der LSFM-Technik dickere Proben analysieren, da die Eindringtiefe höher ist. Darüber hinaus ist die Lichtbelastung der Probe bei diesem Verfahren am geringsten, was die Gefahr des Ausbleichens einer Probe reduziert, da die Probe nur durch ein dünnes Lichtblatt in einem von Null verschiedenen Winkel zur Detektionsrichtung beleuchtet wird.

Anstelle eines rein statischen Lichtblatts kann auch ein quasi-statisches Lichtblatt erzeugt werden, indem die Probe mit einem Lichtstrahl schnell abgetastet wird. Die lichtblattartige Beleuchtung entsteht, indem der Lichtstrahl einer sehr schnellen Relativbewegung zu der zu beobachtenden Probe unterworfen wird und dabei zeitlich aufeinanderfolgend mehrfach aneinander gereiht wird. Dabei kann die Integrationszeit der Kamera, auf deren Sensor die Probe abgebildet wird, so gewählt sein, dass die Abtastung innerhalb der Integrationszeit abgeschlossen wird.

Ein der Hauptanwendungen der Lichtblattmikroskopie liegt in der Bildgebung mittelgroßer Organismen von einigen 100 $\mu$m bis hin zu wenigen mm. In der Regel werden diese Organismen in ein Gel, beispielsweise Agarose, eingebettet, welches sich wiederum in einer Glaskapillare befindet. Die Glaskapillare wird von oben bzw. von unten in eine wassergefüllte Probenkammer eingebracht und die Probe ein Stück aus der Kapillare herausgedrückt. Die Probe in der Agarose wird mit einem Lichtblatt beleuchtet und die Fluoreszenz mit einem Detektionsobjekiv, das - bevorzugt, jedoch nicht zwingend - senkrecht zum Lichtblatt und damit auch senkrecht zum Beleuchtungsobjektiv eines optischen Systems zur Erzeugung eines Lichtblatts steht, auf eine Kamera abgebildet.

Dieses Verfahren der Lichtblattmikroskopie unterliegt jedoch gewissen Einschränkungen. Zum ersten sind die zu untersuchenden Proben relativ groß, sie entstammen der Entwicklungsbiologie. Zum zweiten ist aufgrund der Probenpräparation und der Abmessungen der Probenkammer das Lichtblatt relativ dick und somit die erzielbare axiale Auflösung eingeschränkt. Drittens ist die Präparation der Proben aufwendig und nicht kompatibel zu Standard-Probenpräparationen und Standard-Probenhalterungen wie in der Fluoreszenzmikroskopie für einzelne Zellen üblich.

Um diese Einschränkungen teilweise zu umgehen, wurde in den letzten Jahren ein neuartiger Aufbau realisiert, bei dem das Beleuchtungsobjektiv und das Detektionsobjektiv bevorzugt senkrecht zueinander stehen und unter einem Winkel von 45° von oben auf die Probe gerichtet sind. Solche Vorgehensweisen werden beispielsweise in der WO 2012/110488 A1 und in der WO 2012/122027 A1 beschrieben.

Zur Beleuchtung der Probe wird in der Regel kohärentes Licht eines Lasers verwendet. Die Wellenlänge des Lichts wird in der Fluoreszenzmikroskopie in Abhängigkeit von Markern gewählt, welche zur Fluoreszenzemission angeregt werden sollen. Im einfachsten Fall lässt sich beispielsweise ein Lichtstrahl mit einem Intensitätsprofil, welches einer Gaußfunktion entspricht, statisch mittels Zylinderlinsen zu einem Lichtblatt formen, oder quasi-statisch mittels Abtastung und darauf abgestimmter Integrationszeit der Kamera. Von Vorteil ist dabei eine strukturierte Beleuchtung der Probe, womit die Auflösung erhöht werden kann. So wird beispielsweise in einem Artikel von V. Kettunen et al., "Propagation-invariant spot arrays", erschienen in Optics Letters 23(16), Seite 1247, 1998, die kohärente Überlagerung von Besselstrahlen beschrieben.

Die Überlagerung wird erreicht, indem mit Hilfe eines Algorithmus ein Phasenelement berechnet wird, das in die Pupille eingebracht werden kann. Wird das Spektrum eines Besselstrahls in die Pupille abgebildet, erzeugt das Phasenelement eine Vielzahl von Besselstrahlen, die sich in der Probe überlagern. Das Phasenelement ähnelt einem sternförmigen Gitter mit den Phasenwerten 0 und $\pi$. Es wird als Bedingung angegeben, dass die Abstände der einzelnen Besselstrahlen groß sein müssen, da es sonst zu unerwünschten Interferenzeffekten kommen kann.

In der US 2013/0286181 A1 werden die Interreferenzeffekte zwischen den einzelnen Besselstrahlen gezielt genutzt, um ein ausgedehntes und strukturiertes Lichtblatt zu erzeugen. Hierbei werden die Besselstrahlen so nah nebeneinandergelegt, dass sich die Nebenmaxima der einzelnen Besselstrahlen ober- und unterhalb der Ausbreitungsebene, der Lichtblattebene, destruktiv überlagern. Je nach Abstand der einzelnen Besselstrahlen zueinander ergeben sich unterschiedliche Interferenzmuster.

In der WO 2014/005682 A1 wird die Erzeugung von sogenannten $sinc^3$-Strahlen beschrieben. In der Probe lässt sich damit ein nahezu quaderförmiges Lichtblatt mit nur geringem Nebenmaxima erzeugen. Der $sinc^3$-Strahl kann im Frequenzraum als das Produkt dreier sinc-Funktionen beschrieben werden:

$$f = f_{vr} f_{vx} f_{vy}$$

mit

$$f_{vr}(v_r) = \mathrm{sinc}\left[\frac{(v_r - c_r)^2}{w_z}\right], \quad f_{vx}(v_x) = \mathrm{sinc}\left[\frac{(v_x - c_x)^2}{w_x}\right], \quad f_{vy}(v_y) = \mathrm{sinc}\left[\frac{(v_y - c_y)^2}{w_y}\right]$$

und

$$v_r(v_x, v_y) = \sqrt{v_x^2 + v_y^2} \quad .$$

Die Koeffizienten $c_r$, $c_x$ und $c_y$ geben die Position des $sinc^3$-Strahls in der Pupillenebene an, die Koeffizienten $w_x$, $w_y$ und $w_z$ geben die Breite des $sinc^3$-Strahls in der jeweiligen Richtung an.

Die Fourier-Transformation dieser Funktion f ergibt das komplexe elektrische Feld EF des Lichtblatts. Die Intensitätsverteilung I im Fokus ergibt sich aus I = abs(EF)$^2$, die Phase $\varphi$ ergibt sich zu $\varphi$ = arg(EF). Auch $sinc^3$-Strahlen können kohärent überlagert werden, so dass ein strukturiertes, gitterartiges Lichtblatt entsteht.

Zur Erzeugung der oben beschriebenen Strahlarten lassen sich beispielsweise räumliche Lichtmodulatoren (*SLM, spatial light modulator*) verwenden. Für Bessel-Strahlen ist dies beispielsweise in einem Artikel von Rohrbach et al., "A line scanned light-sheet microscope with phase shaped self-reconstructing beams", erschienen in Optics Express 18, Seite 24229 im Jahr 2010 anhand von Flüssigkristall-SLMs beschrieben. Dabei gibt es zwei Arten von räumlichen Flüssigkristall-Lichtmodulatoren, die sich durch die verwendeten Flüssigkristalle unterscheiden.

Nematische SLM ermöglichen einen maximalen kontinuierlich einstellbaren Phasenhub von 0 bis hin zu $6\pi$. Allerdings sind diese SLM relativ langsam: In der Regel haben Sie Bildwiederholraten von etwa 60 Hz, maximal von bis zu 500 Hz. Hingegen liegt die Beugungseffizienz von nematischen SLM bei über 90%.

Auf der anderen Seite gibt es ferroelektrische SLM, welche nur zwischen Zuständen ohne Phasenhub und einem Phasenhub von $\pi$ hin- und herschalten können. Dafür sind diese SLM sehr schnell schaltbar, so dass sich Bildwiederholraten von bis zu 4000 Hz erreichen lassen. Allerdings ist die Beugungseffizienz mit etwa 14% sehr gering.

Beide SLM-Arten haben gemeinsam, dass der erzielbare Phasenhub von der Wellenlänge des eingestrahlten Laserlichts abhängt. Ein nematischer SLM sollte idealerweise so kalibriert sein, dass er einen kontinuierlichen Phasenhub von 0 bis zu einer ganzen Wellenlänge, also $2\pi$ aufweist. Dieser Phasenhub kann allerdings nur bei einer einzigen Wellenlänge eingestellt werden, für die er dann ausgelegt ist. Sobald der SLM mit einem Laser anderer Wellenlänge bestrahlt wird, verändert sich der Phasenhub und ist ungleich $2\pi$. Bei kürzerer Wellenlänge wird der Phasenhub größer, bei längerer Wellenlänge verringert sich der Phasenhub.

Bei einem ferroelektrischen SLM verhält es sich ähnlich. Auch hier wird der Phasenhub von $\pi$ nur bei derjenigen Wellenlänge erreicht, für die das auf dem SLM dargestellte Muster ausgelegt ist. Bei abweichenden Wellenlängen weicht der Phasenhub von $\pi$ ab. Dies hat direkte Auswirkungen auf die Erzeugung der oben genannten Bessel- oder $sinc^3$-Strahlen, so können diese Strahlen nur dann optimal erzeugt werden, wenn der Phasenhub kontinuierlich zwischen 0 und $2\pi$ variiert, wie es für Bessel- und Mathieustrahlen notwendig ist, bzw. wenn der Phasenhub exakt $\pi$ beträgt, wie für kohärent überlagerte Bessel- oder $sinc^3$-Strahlen der Fall ist.

Zur fluoreszenzmikroskopischen Analyse wird eine Probe oft mit verschiedenen Markern präpariert, die jeweils verschiedene Strukturen der Probe sichtbar machen können. Daher ist es wünschenswert, in der Lichtblattmikroskopie die Probe mit Lichtblättern verschiedener Wellenlängen anzuregen. Bei Verwendung eines räumlichen Lichtmodulators zur Strahlformung kann eine optimale Mehrfarbanregung realisiert werden, wenn die einzelnen verschiedenfarbigen Lichtblätter sequenziell eingestrahlt werden und beim Wechsel der Wellenlänge das Phasenmuster auf dem SLM angepasst wird. Beispielsweise wird in einem ersten Durchgang der SLM auf eine erste Laserwellenlänge eingestellt und ein Bildstapel in z-Richtung, der Detektionsrichtung, bei dieser Wellenlänge aufgenommen. Im Anschluss wird der SLM auf eine zweite Wellenlänge eingestellt und abermals ein Bildstapel bei dieser Wellenlänge aufgenommen. Diese Methode hat jedoch den Nachteil, dass die Aufnahme des Bildstapels relativ lange dauern kann, bis hin zu mehreren zehn Sekunden. Bewegt oder verändert sich die Probe während dieser Zeit, stimmen die verschiedenfarbigen Bildstapel nicht mehr überein und lassen sich nicht zu einem Gesamtbild kombinieren.

Alternativ kann jedes Einzelbild des Bildstapels erst mit den verschiedenen Wellenlängen aufgenommen werden, bevor das nächste Bild eines Bildstapels aufgenommen wird. Dies hat jedoch den Nachteil, dass bei Belichtungszeiten von etwa 10 ms die Optimierung des räumlichen Lichtmodulators auf die neue Laserwellenlänge etwa 100 Mal pro Sekunde stattfinden muss. Mit normalen nematischen SLM lässt sich dies nicht erreichen, so dass ferroelektrische SLM mit ihrer geringen Lichteffizienz und dem eingeschränkten Phasenhub verwendet werden müssen.

In der nicht vorveröffentlichten DE 10 2014 119 255 wird ein Verfahren beschrieben, mit dem sich mehrfarbige Lichtblätter mit nur einer einzigen Phasenmaske, in der Regel einem SLM, erzeugen lassen, wobei für alle Wellenlängen, die zur Beleuchtung verwendet werden, eine gemeinsame Phasenverteilung vorgegeben wird. Dies ermöglicht eine schnelle sequenzielle oder auch eine simultane Beleuchtung mit Beleuchtungslicht mehrerer Farben. Die Phasenverteilung ist dann nachteilig nicht für jede Wellenlänge optimal, sondern wird für eine Vorzugswellenlänge bestimmt. Je mehr die Wellenlängen des Beleuchtungslichts davon abweichen, desto größer sind die Qualitätseinbußen des jeweiligen Lichtblatts. Beispielsweise können sie sich in ihrer Dicke unterscheiden, oder im Auftreten von Nebenmaxima, was u.U. dazu führt, dass die Messergebnisse für verschiedene Farbstoffe nicht direkt miteinander verglichen oder aufeinander bezogen werden können.

## Beschreibung der Erfindung

Die Aufgabe der Erfindung besteht darin, eine Methode bereitzustellen, die es ermöglicht, eine Probe mit einem mehrfarbigen Lichtblatt unterschiedlicher Wellenlängen simultan oder sequenziell in sehr kurzer Zeit mit statischer Phasenmodulation zu beleuchten, so dass gleichzeitig für mehrere Farben detektiert werden kann und die Aufnahmedauer gegenüber einer sequenziellen Anregung reduziert wird, wobei bevorzugt auch nematische SLM aufgrund ihrer hohen Beugungseffizienz verwendet werden sollen, und wobei für jede der Wellenlängen die Lichtblattqualität bestmöglich und möglichst identisch sein soll.

Diese Aufgabe wird für ein Verfahren zur lichtblattmikroskopischen Untersuchung einer Probe gelöst, indem mehrere Beleuchtungswellenlängen ausgewählt werden, aus denen Beleuchtungslicht für die Probe zusammengesetzt wird.

Die Beleuchtungswellenlängen werden dabei in der Regel anhand des durchzuführenden Experiments ausgewählt, beispielsweise in Abhängigkeit von den Farbstoffen, mit denen eine Probe markiert ist, und davon, welche Fluoreszenz angeregt werden sollen. Zur Strukturierung des Beleuchtungslichtes werden dem phasenselektiven Element für jede der Beleuchtungswellenlängen eine vorgegebene Phasenverteilung und vorzugsweise auch einer Blende in einer Blendenebene eine vorgegebene Blendenstruktur aufgeprägt. Dies kann beispielsweise erfolgen, indem in einem ersten Schritt in der Fokusebene eines Beleuchtungsobjektivs für ein Lichtblatt vorgegebener Form dessen elektrisches Feld mit Licht der jeweiligen Beleuchtungswellenlänge bestimmt wird. Daraus wird die jeweils vorzugebende Phasenverteilung berechnet, sie ist das Argument des komplexen elektrischen Feldes $\varphi = \arg(EF)$ mit der Phase $\varphi$. Für die Bestimmung bzw. Berechnung des elektrischen Feldes des Lichtblattes wird dabei davon ausgegangen, dass für die Vorzugswellenlänge ein mittlerer bzw. zentraler Bereich - bezogen auf die Position des Lichtblatts in der Blendenebene - abgeblendet ist, um die nullte Ordnung, welche in der Realität zur Erzeugung eines strukturierten Lichtblatts ausgeblendet werden muss, bei der Berechnung ebenfalls auszuschließen. Auch hier ist also der mittlere Bereich bezogen auf den Position des Lichtblattes ausgeblendet, so dass die Blendenstruktur die nullte Ordnung des strukturierten Lichtes der jeweiligen Beleuchtungswellenlänge ausblendet.

Die Berechnung des elektrischen Feldes im Fokus des Beleuchtungsobjektivs kann beispielsweise über eine Fourier-Transformation der sogenannten Pupillenfunktion, d.h. des elektrischen Feldes im Frequenzraum, anhand seiner Verteilung in der Pupille erfolgen. Jede der vorgegebenen Phasenverteilungen wird dann dem phasenselektiven Element in einem eigenen, der jeweiligen Beleuchtungswellenlänge zugeordneten Selektionsbereich, welcher nicht mit den übrigen Selektionsbereichen überlappt, aufgeprägt. Das phasenselektive Element befindet sich vorzugsweise im Zwischenbild. Handelt es sich um ein statisches phasenselektives Element, wie beispielsweise um eine Phasenplatte, so wird diese entsprechend hergestellt. Dabei können verschiedene Phasenplatten für verschiedene Mengen von Wellenlängen bereitgehalten werden, die dann in Abhängigkeit von den gewählten Beleuchtungswellenlängen im Strahlengang eingebracht werden. Ansteuerbare phasenselektive Elemente, wie beispielsweise - vorzugsweise nematische - räumliche Lichtmodulatoren, werden entsprechend angesteuert und eingestellt.

Optional können weitere Justierungsmaßnahmen vorgenommen werden. Beispielsweise kann die Phasenverteilung mit einer Einhüllendenfunktion senkrecht zur Lichtblattebene multipliziert werden. Auf diese Weise kann die Dicke des Lichtblattes eingestellt werden, außerdem können Nebenmaxima senkrecht zur Lichtblattebene unterdrückt werden. Die Phasenverteilungen können auch für die Aufprägung auf das phasenselektive Element durch Größenskalierung so angepasst werden, dass das Spektrum in der Pupille dem anfangs berechneten entspricht, oder das Lichtblatt in der Probe vorgegebene Abmessungen hat.

Das phasenselektive Element wird dann in oder in der Nähe einer Zwischenbildebene in einem Beleuchtungsstrahlengang mit Beleuchtungslicht beleuchtet. Dabei wird auf jeden Selektionsbereich nur Licht der jeweiligen Beleuchtungswellenlänge gelenkt. Dies kann erfolgen, indem entweder für jede Beleuchtungswellenlänge ein eigener Strahlengang vorgesehen ist, der von den Strahlengängen für den anderen Beleuchtungswellenlängen bis zum phasenselektiven Element getrennt verläuft, oder aber durch die Aufspaltung eines für alle Beleuchtungswellenlängen gemeinsamen Strahls bzw. Strahlengangs in einzelne, jeweils einer Beleuchtungswellenlänge zugeordnete Strahlengänge. Die Strahlaufspaltung kann beispielsweise - in Abhängigkeit auch von der Anzahl verschiedener Beleuchtungswellenlängen - durch einen oder mehrere, dann beispielsweise sequenziell angeordnete, an die Beleuchtungswellenlängen angepasste Strahlteiler erfolgen, oder auch durch dispersive oder diffraktive Elemente, welche das Beleuchtungslicht spektral differenziert umlenken bzw. spektral aufspalten.

Das Beleuchtungslicht wird durch das phasenselektive Element strukturiert, wobei diese Strukturierung für jede Beleuchtungswellenlänge im zugeordneten Selektionsbereich erfolgt, jedoch nicht in den anderen Selektionsbereichen. Licht einer vorgegebenen Beleuchtungswellenlänge wird nur auf den zugeordneten Selektionsbereich gelenkt. Nach der Strukturierung wird das Licht der verschiedenen Beleuchtungswellenlängen zu einem gemeinsamen Strahl vereinigt, der im weiteren Verlauf in das Beleuchtungsobjektiv eingekoppelt wird. Zuvor kann das strukturierte Beleuchtungslicht in eine dem phasenselektiven Element nachgeordnete Blendenebene, in welcher ein Frequenzspektrum des Beleuchtungslichts der jeweiligen Beleuchtungswellenlänge erzeugt wird, abgebildet werden. Diese Abbildung kann nach der Vereinigung zu einem gemeinsamen Strahl erfolgen. Es erfolgt dann eine Anpassung der Blendenstruktur derart, dass die nullten Ordnungen des strukturierten Beleuchtungslichts der jeweiligen Beleuchtungswellenlänge in der Blendenebene im Wesentlichen ausgeblendet werden, wodurch in einer Fokusebene eines nachgeordneten Beleuchtungsobjektivs ein strukturiertes, mehrfarbiges Lichtblatt geformt wird, bzw. ein strukturiertes Lichtblatt der jeweiligen Beleuchtungswellenlänge mit einer Lichtblattebene, die senkrecht zur Fokusebene des Beleuchtungsobjektivs liegt. Anschließend wird die Probe mit dem strukturierten Lichtblatt der jeweiligen Beleuchtungswellenlänge in der Lichtblattebene beleuchtet und von der Probe abgestrahltes Licht in einer Detektionseinrichtung detektiert. Die Detektionseinrichtung schließt mit der Lichtblattebene einen von Null verschiedenen Winkel ein. Dieser Winkel wird vorzugsweise bei 90° gewählt, da dies die bestmögliche Trennung von Beleuchtung und Detektion ermöglicht. Es sind jedoch insbesondere wenn die baulichen Gegebenheiten einen rechten Winkel nicht zulassen, auch kleinere Winkel möglich, beispielsweise 30° oder 70°. Je nach Ausgestaltung kann das Licht der verschiedenen Beleuchtungswellenlängen sequenziell oder simultan auf das phasenselektive Element gelenkt werden, in der Folge wird die Probe entweder sequenziell bzw. quasi-simultan oder simultan mit Lichtblättern verschiedener Farben beleuchtet.

Die Blende in der Blendenebene kann auf verschiedene Weise weiter angepasst werden. Wird beispielsweise eine Größenskalierung vorgenommen, so kann eine Blendenjustierung dafür sorgen, dass genau die nullten Ordnungen des überlagerten Lichts ausgeblendet werden. Eine andere Möglichkeit der Justierung der Blende besteht darin, unerwünschte Nebenmaxima der Pupillenfunktion auszublenden.

Auf diese Weise wird eine lichtblattmikroskopische Beleuchtungseinrichtung so justiert, dass sie bei Verwendung von Licht der Beleuchtungswellenlängen für jede dieser Beleuchtungswellenlängen ein bestmöglich strukturiertes Lichtblatt erzeugt, so dass eine simultane oder quasi-simultane Anregung der Probe mit mehreren Wellenlängen ermöglicht wird.

Dabei kann der Eingangsstrahl, beispielsweise ein gaußförmiger Laserstrahl, bevorzugt elliptisch kollimiert werden, um die Lichtleistung in einer nullten Ordnung einerseits möglichst gering zu halten und andererseits das Lichtblatt nur geringstmöglich zu beeinflussen.

Als phasenselektives Element lässt sich beispielsweise ein diffraktives optisches Element verwenden. Dieses kann als Phasenplatte statisch ausgebildet sein, wobei der Phasenplatte die entsprechenden Selektionsbereiche für die ausgewählten Beleuchtungswellenlängen aufgeprägt sind. Hier erfolgt nur eine einmalige Anpassung an bestimmte Wellenlängen. Für verschiedene Kombinationen von Beleuchtungswellenlängen lassen sich dann verschiedene Phasenplatten in den Strahlengang eindringen. Eine andere Möglichkeit besteht darin, als diffraktives optisches Element einen räumlichen Lichtmodulator (SLM) zu verwenden. Dies bietet den Vorteil, dass dieser über eine Ansteuerung auf verschiedene Beleuchtungswellenlängen eingestellt werden kann, ohne dass ein Wechsel notwendig wird; außerdem lassen sich mit einem SLM verschiedene Strahlformen für die jeweiligen Lichtblätter realisieren. Während der Analyse der Probe werden die Eigenschaften des räumlichen Lichtmodulators (SLM) jedoch nicht verändert. Der SLM verhält sich statisch.

Das phasenselektive Element kann aber auch als Baugruppe aus mehreren Einzelelementen zusammengesetzt werden, beispielsweise kleinen Phasenplatten, die nur einen Teil des Strahlengangs abdecken, wobei jedes Einzelelement jeweils einen, einer bestimmten Beleuchtungswellenlänge zugeordneten Selektionsbereich umfasst. Diese Einzelelemente können dann entweder nebeneinander im Strahlengang, oder hintereinander angeordnet werden. Sind die phasenselektiven Elemente - wie beispielsweise Phasenplatten - statisch aufgebaut, so werden in der Regel mehrere Phasenplatten vorgehalten, mit denen sich verschiedene Kombinationen von Beleuchtungswellenlängen je nach Untersuchungskonfiguration verwenden lassen. Diese können dann mechanisch oder motorisch in den Strahlengang eingewechselt werden, beispielsweise können mehrere Phasenplatten auf einem Filterrad angeordnet sein.

Vorteilhaft wird außerdem für jeden Selektionsbereich in Abhängigkeit von der Beleuchtungswellenlänge die Modulationstiefe auf $\pi$ festgelegt. Für jeden Selektionsbereich kann also der Phasenhub auf $\pi$ eingestellt werden, dies erfolgt in der Regel bei einem SLM mit Steuerspannungen. Für jeden Selektionsbereich ist der Phasenhub dann also optimal: Bei einem Phasenhub von $\pi$ ist die Beugungseffizienz am höchsten und die gesamte einfallende Laserstrahlung wird manipuliert, d.h. in eine gewünschte Strahlform umverteilt. Bei einer von $\pi$ abweichenden Modulationstiefe würde sich die Beugungseffizienz verringern und ein Teil der Laserleistung würde in die nullte Ordnung umverteilt. Findet kein Phasenhub statt bzw. ein Phasenhub nur um ein Vielfaches von $2\pi$, so wird die gesamte Laserleistung in die nullte Ordnung gebeugt, so dass die gewünschte Strahlform nicht erzeugt wird.

Wird ein räumlicher Lichtmodulator (SLM) verwendet, so lassen sich im Strahlengang selbst leichter Anpassungen vornehmen, beispielsweise können verschiedene Einhüllendenfunktionen in der Richtung senkrecht zur Lichtblattebene mit den den Selektionsbereichen aufgeprägten Phasenverteilungen multipliziert werden und so weitere Einstellungen vorgenommen werden. Auch eine Größenskalierung lässt sich auf einem SLM einfacher vornehmen.

Während als Eingangsstrahl, welcher kollimiert und auf das phasenselektive Element gelenkt wird, oft ein Strahl mit gaußförmigem Intensitätsprofil verwendet wird, setzt man für die Berechnung des elektrischen Feldes des Lichtblatts vorzugsweise Formen an, die besser für eine gleichmäßige Ausleuchtung bzw. strukturierte Beleuchtung der Probe geeignet sind, als ein gaußförmiger Lichtstrahl, welcher selbstverständlich ebenfalls zur Berechnung des elektrischen Feldes des Lichtblatts verwendet werden kann.

In einer bevorzugten Ausgestaltung wird daher das elektrische Feld des Lichtblatts bestimmt, indem zur Formung des Lichtblatts mindestens zwei sinc$^3$-Strahlen verwendet werden, die sich in der Fokusebene des Beleuchtungsobjektivs kohärent überlagern. Hierbei wird von der eingangs angegebenen Pupillenfunktion ausgehend das elektrische Feld des Lichtblatts in der Probe, d.h. in der Fokusebene, durch Fourier-Transformation berechnet. Aus dem sich in der Fokusebene ergebenden elektrischen Feld, dem Überlagerungsfeld, wird die Phase bestimmt und diese dem phasenselektiven Element für jede Beleuchtungswellenlänge ausschließlich in dem zugeordneten Selektionsbereich aufgeprägt. Ein wesentlicher Vorteil von sinc$^3$-Strahlen liegt darin, dass sich mit ihnen ein nahezu quaderförmiges Lichtblatt mit gleichmäßiger Ausleuchtung in der Probe bilden lässt, mit nur gering ausgeprägten Nebenmaxima. Bei kohärenter Überlagerung lässt sich ein strukturiertes, gitterartiges Lichtblatt generieren, wobei die Eigenschaften des Lichtblattes für jede Farbe aufgrund der Tatsache, dass für jede Beleuchtungswellenlänge ein eigener Selektionsbereich verwendet wird, die gleiche Qualität haben.

In einer anderen bevorzugten Ausgestaltung wird das elektrische Feld des Lichtblatts bestimmt, indem zur Formung des Lichtblatts Besselstrahlen vorgegebener Form verwendet werden. Für einen solchen Besselstrahl wird das elektrische Feld in der Fokusebene bestimmt und rechnerisch eine Überlagerung dieses elektrischen Feldes und identischer, jeweils um einen vorgegebenen Betrag $\Delta$ in der Fokusebene voneinander beabstandeter elektrischer Felder bestimmt. Der Abstand $\Delta$ wird dabei so lange variiert, bis ein optimales Lichtblatt eingestellt ist, d.h. sich die Nebenmaxima der einzelnen Besselstrahlen bevorzugt destruktiv überlagern, so dass ein im Querschnitt langes, dünnes Lichtblatt mit nur geringen Nebenmaxima entsteht.

Weitere Einzelheiten zur Strahlformung und auch zum grundliegenden Aufbau entsprechender Strahlformungsmodule, die sich auch auf die Verwendung einer einzigen Beleuchtungswellenlänge übertragen lassen, sind in der bereits eingangs erwähnten, nicht vorveröffentlichten DE 10 2014 119 255, deren Inhalt vollumfänglich mit einbezogen wird, und auf die ausdrücklich verwiesen wird, beschrieben.

Die Erfindung betrifft außerdem auch ein Lichtblattmikroskop, welches in der Lage ist, eine Probe mit einem mehrfarbigen Lichtblatt zu beleuchten, welches insbesondere geeignet ist, das vorangehend beschriebene Verfahren umzusetzen. Ein solches Lichtblattmikroskop umfasst eine Beleuchtungseinrichtung, welche für mehrere Beleuchtungswellenlängen kohärentes Beleuchtungslicht erzeugt. Daneben umfasst das Lichtblattmikroskop ein Strahlformungsmodul zur Erzeugung eines Lichtblatts aus Beleuchtungslicht, ein Beleuchtungsobjektiv zur Beleuchtung einer Probe mit dem Lichtblatt und ein Detektionsobjektiv zur Abbildung von Licht, welches von der Probe emittiert wird, auf einen flächenförmigen Detektor, wobei die optische Achse des Detektionsobjektivs mit der optischen Achse des Beleuchtungsobjektivs einen von 0° und von 180° verschiedenen Winkel einschließt, bevorzugt einen Winkel von 90°.

Das Strahlformungsmodul des genannten Lichtblattmikroskops umfasst zur Lösung der Aufgabe ein phasenselektives Element, auf welchem mehrere, voneinander räumlich getrennte Selektionsbereiche angeordnet sind, wobei jeweils ein Selektionsbereich einer spezifischen Beleuchtungswellenlänge zugeordnet ist. Das Strahlformungsmodul umfasst außerdem Mittel zur sequenziellen oder simultanen Auswahl und Beleuchtung der Selektionsbereiche in Abhängigkeit von der jeweiligen Beleuchtungswellenlänge. Die Selektionsbereiche sind dabei so ausgestaltet, wie bereits vorangehend im Zusammenhang mit dem Verfahren beschrieben wurden. Die Selektionsbereiche überlappen einander nicht und jedem Selektionsbereich ist eine für die jeweilige Beleuchtungswellenlänge vorgegebene Phasenverteilung aufgeprägt.

Das phasenselektive Element ist dann in oder in der Nähe von einer Zwischenbildebene im Beleuchtungsstrahlengang angeordnet. Es ist vorzugsweise als diffraktives optisches Element, besonders bevorzugt als räumlicher Lichtmodulator (SLM) ausgebildet, vorzugsweise als nematischer SLM. Es kann aber auch als Phasenplatte ausgebildet sein, oder als Baugruppe aus mehreren Einzelelementen, beispielsweise mehreren kleineren Phasenplatten zusammengesetzt sein, wobei jedem ein Einzelelement jeweils eine Beleuchtungswellenlänge zugeordnet ist.

Die Mittel zur sequenziellen oder simultanen Auswahl und Beleuchtung der Selektionsbereiche in Abhängigkeit von der jeweiligen Beleuchtungswellenlänge lassen sich auf verschiedene Weise realisieren, wobei im Folgenden davon ausgegangen wird, dass der Strahlengang für alle Beleuchtungswellenlängen zumindest in dem Bereich vor dem phasenselektiven Element im Strahlformungsmodul ein gemeinsamer Strahlengang ist, d.h. vor dem Auftreffen des Beleuchtungslichts auf das phasenselektive Element eine spektrale Zerlegung des Beleuchtungslichts in die Beleuchtungswellenlängen erfolgen muss, entsprechend der Auswahl der Selektionsbereiche. Vor der Einkopplung in das Beleuchtungsobjektiv werden die getrennten Lichtwege des Lichts der einzelnen Beleuchtungswellenlängen wieder zusammen geführt, weshalb das Strahlformungsmodul auch Mittel zur Strahlvereinigung von Licht der Beleuchtungswellenlängen umfasst.

In einer Ausgestaltung des Lichtblattmikroskops umfassen die Mittel zur sequenziellen Auswahl eines Selektionsbereichs ein zwischen einer Lichtquelle und dem phasenselektiven Element angeordnetes Lichtwegauswahlelement zur Umlenkung des Lichts in Abhängigkeit von der Beleuchtungswellenlänge auf den jeweiligen Selektionsbereich. Außerdem umfassen die Mittel zur sequenziellen Auswahl eines Selektionsbereichs einen dem phasenselektiven Element nachgeordneten Segmentspiegel aus mehreren Segmenten, welcher das einfallende Licht wieder auf den der jeweiligen Beleuchtungswellenlänge zugeordneten Selektionsbereich des phasenselektiven Elements zurückwirft. Dabei ist jeweils ein Segment einer Beleuchtungswellenlänge zugeordnet. Zwischen Segmentspiegel und phasenselektivem Element ist außerdem eine λ/4-Platte angeordnet, ebenfalls zu den Mitteln zur sequenziellen Auswahl gehörig, wobei das phasenselektive Element die Phase des Lichts bei einer ersten Polarisationsrichtung nicht modifizierend ausgestaltet ist und bei einer zweiten, zur ersten senkrechten Polarisationsrichtung die Phase modifizierend ausgestaltet ist.

Im Falle dieses Ausführungsbeispiels werden die Selektionsbereiche sequenziell ausgewählt, d.h. Licht der verschiedenen Beleuchtungswellenlängen wird nacheinander in den Beleuchtungsstrahlengang eingekoppelt, jedoch nicht mehrerer Beleuchtungswellenlängen gleichzeitig. Der Wechsel kann dabei so schnell erfolgen, dass im Ergebnis eine quasi-simultane Beleuchtung mit einem mehrfarbigen Lichtblatt erreicht werden kann. In Abhängigkeit von der jeweiligen Beleuchtungswellenlänge lenkt das Lichtwegauswahlelement das Licht in den zugeordneten Selektionsbereich um. Bei dem Lichtwegauswahlelement kann es sich beispielsweise um einen schaltbaren Spiegel handeln, dessen Winkel zur optischen Achse des einfallenden Lichtstrahls je nach verwendeter Beleuchtungswellenlänge geändert werden kann. Die Einstellung kann beispielsweise über eine Kontrolleinheit erfolgen, welche direkt mit den Emissionsquellen, beispielsweise Lasern in einem Lasermodul, verbunden ist, so dass je nach eingekoppelter Lichtquelle der entsprechende Winkel automatisch eingestellt wird. Auch die Verwendung fest angeordneter, statischer Lichtwegauswahlelemente ist denkbar, beispielsweise kann ein Prisma oder eine Kombination von Prismen, Glasplatten oder anderen dispersiven Elementen verwendet werden, oder auch diffraktive Elementen, wobei bei der Verwendung von dispersiven und diffraktiven Elementen auch eine simultane Auswahl möglich ist. Wesentlich ist, dass das im Strahlengang dem Lichtwegauswahlelement nachgeordnete phasenselektive Element so angeordnet ist, dass jeweils nur Licht der zugeordneten Beleuchtungswellenlänge auf den entsprechenden Selektionsbereich trifft und das Licht anderer Beleuchtungswellenlängen nicht auf den ausgewählten Selektionsbereich trifft, sondern auf die diesen Wellenlängen zugeordneten Selektionsbereiche.

Vom phasenselektiven Element wird das Licht auf den Segmentspiegel geleitet, wo es wieder in Richtung des phasenselektiven Elements reflektiert wird. Der Segmentspiegel ist dabei so aufgebaut, dass jeweils ein Segment einem Selektionsbereich zugeordnet ist und von diesem Selektionsbereich kommendes Licht wieder genau in diesen Selektionsbereich zurückwirft. Die einzelnen Segmente sind beispielsweise plane Spiegelflächen. Da die λ/4-Platte zwischen phasenselektivem Element und Segmentspiegel angeordnet ist, durchläuft sie der Lichtstrahl zweimal, so dass die Polarisation des rücklaufenden Lichtstrahls beim Auftreffen auf das phasenselektive Element gegenüber der ursprünglichen Polarisation um 90° gedreht ist. Die λ/4-Platte wirkt also wie eine λ/2-Platte bei einmaligem Durchlauf.

Das phasenselektive Element ist entsprechend den Polarisationsrichtungen ausgerichtet, so dass bei einer ersten der beiden Polarisationsrichtungen des Lichts das Licht in den Selektionsbereichen nicht modifiziert wird und bei der zweiten der beiden Polarisationsrichtungen das Licht modifiziert wird. Wird das Licht nicht modifiziert, so wirkt das phasenselektive Element nur reflexiv als Spiegel. Vorzugsweise ist die Polarisation so eingestellt, dass das phasenselektive Element dabei auf das vom Lichtwegauswahlelement kommende Licht zunächst wie ein Spiegel wirkt und auf den Rückweg, wenn die Polarisation um 90° gedreht ist, phasenmanipulierend. Grundsätzlich ist auch eine umgekehrte Reihenfolge denkbar, die Vorzugsvariante hat jedoch den Vorteil, dass für die folgende Abbildung des Phasenmusters, welches in der Regel im Zwischenbild oder in der Nähe davon steht, eine Optik mit einer kürzeren Brennweite verwendet werden kann. Über das Lichtwegauswahlelement kann das von den Selektionsbereichen kommende, phasenmodifizierte Licht wieder in den Strahlengang eingekoppelt werden und beispielsweise über einen Polarisationsstrahlteiler von dem nicht strukturierten Beleuchtungslicht, welches direkt von den Lichtquellen kommt, getrennt werden.

In einer anderen Ausgestaltung des Lichtblattmikroskops umfassen die Mittel zur simultanen Auswahl eines Selektionsbereichs ein oder mehrere, zwischen einer Lichtquelle und dem phasenselektiven Element angeordnete, bezüglich der Farbe des Lichts selektive Umlenkelemente. Jedes der Umlenkelemente ist dabei jeweils einer Beleuchtungswellenlänge zugeordnet und ist Licht nur dieser Beleuchtungswellenlänge auf den jeweiligen Selektionsbereich lenkend angeordnet. Dem phasenselektiven Element nachgeordnet ist ein Planspiegel und zwischen Planspiegel und phasenselektivem Element ist eine λ/4-Platte angeordnet. Das phasenselektive Element ändert auch hier die Phase des Lichts bei einer ersten Polarisationsrichtung nicht und modifiziert die Phase bei einer zweiten, zur ersten senkrechten Polarisationsrichtung, wie es bereits im Zusammenhang mit der vorangehend genannten Ausführung beschrieben wurde. In beiden Fällen muss selbstverständlich für eine entsprechende Eingangspolarisation des Lichtes gesorgt werden. Die Anordnung gemäß dieses Ausführungsbeispiels ist zwar vorzugsweise zur simultanen Auswahl eines Selektionsbereichs, d.h. zur simultanen Beleuchtung geeignet, kann jedoch auch für eine sequenzielle Auswahl eines Selektionsbereichs verwendet werden. Als Umlenkelemente können beispielsweise dichroitische Strahlteiler und - nur im letzten Glied einer Kette von Strahlteilern, die das Licht der Reihe nach durchtritt, möglich - Spiegel verwendet werden. Werden beispielsweise nur zwei Beleuchtungswellenlängen verwendet, so reicht ein dichroitischer Strahlteiler aus. Licht der dem Strahlteiler zugeordneten Beleuchtungswellenlänge wird vermittels des Strahlteilers in den entsprechenden Selektionsbereich gelenkt, Licht der zweiten Beleuchtungswellenlänge tritt durch den Strahlteiler hindurch und trifft auf einen Spiegel, der - da einfallendes Licht nur diese Beleuchtungswellenlänge hat - das Licht nur dieser Beleuchtungswellenlänge auf den Selektionsbereich lenkt. Anstelle eines Spiegels im letzten Glied der Kette kann natürlich auch ein weiterer Strahlteiler verwendet werden. Sofern die Strahlteiler nicht in Reihe angeordnet sind, sonder das Licht beispielsweise ohne spektrale Zerlegung zuvor auf verschiedene Strahlwege aufgeteilt wurde, ist die Verwendung eines Spiegels in der Regel nicht möglich, sofern er nicht mit einer speziellen Farbteilerschicht bezogen ist.

In einer bevorzugten Ausführung dieses Lichtblattmikroskops ist jedem Selektionsbereich ein Blaze-Gitter aufgeprägt, welches bei der zweiten Polarisationsrichtung den Ausfallswinkel des Lichts modifizierend ausgestaltet ist. Auf diese Weise kann eine zusätzliche Winkelablenkung beispielsweise auf dem Rückweg des Lichts erreicht werden, so dass eine einfachere Auskopplung über einen Spiegel möglich wird und auf einen Polarisationsstrahlteiler verzichtet werden kann.

In einer anderen Ausführung umfassen die Mittel zur simultanen Auswahl eines Selektionsbereichs des Lichtblattmikroskops ein oder mehrere zwischen einer Lichtquelle - die beispielsweise aus mehreren Lasern zusammengesetzt sein kann und Licht der Beleuchtungswellenlängen emittiert - und dem phasenselektiven Element angeordnete, bezüglich der Farbe selektive Eingangsumlenkelemente. Jedes der Eingangsumlenkelemente ist jeweils einer Beleuchtungswellenlänge zugeordnet und ist Licht dieser Beleuchtungswellenlänge auf den jeweiligen Selektionsbereich lenkend angeordnet. Diese Eingangsumlenkelemente dienen der spektralen Aufspaltung des Strahls nach Beleuchtungswellenlänge, sie sind dem phasenselektiven Element vorgeordnet. Dem phasenselektiven Element nachgeordnet sind ebenfalls ein oder mehrere Ausgangsumlenkelemente, wobei jedes der Ausgangsumlenkelemente wieder jeweils einer Beleuchtungswellenlänge zugeordnet ist und Licht aus dem jeweiligen Selektionsbereich umlenkt. In beiden Fällen kann es sich bei den Eingangs- und Ausgangsumlenkelementen beispielsweise um dichroitische Strahlteiler handeln, die auch identisch aufgebaut sein können. Auch können Eingangs- und Ausgangsumlenkelemente identisch sein, d.h. das Licht trifft zweimal auf das jeweilige Eingangs- und Ausgangsumlenkelement, mit einer entsprechenden Konfiguration von Spiegeln. Außerdem können die Eingangs- und Ausgangsumlenkelemente so konfiguriert sein, dass sie mehrere Wellenlängen umlenken, beispielsweise durch entsprechende Beschichtungen. In Bezug auf die Verwendung von Spiegeln wird auf die Ausführungen zu dem vorangehend beschriebenen Ausführungsbeispiel verwiesen. In diesem Ausführungsbeispiel kann ein doppelter Durchgang mit verschiedener Polarisation durch das phasenselektive Element vermieden werden, mögliche Restmodulationen aufgrund einer Polarisationsdrehung um nicht genau 90° können so vermieden werden.

Zum Ausgleich von Weglängenunterschieden zwischen Wegen des Lichts der einzelnen Beleuchtungswellenlängen können zwischen dem phasenselektiven Element und den Ausgangsumlenkelementen Ausgleichselemente, die beispielsweise einen zusätzlichen Glasweg erzeugen, angeordnet sein, so dass die Lichtblätter in der Probe räumlich simultan überlagert werden und die gleichen Probenbereiche angeregt werden. Alternativ kann aber ein solcher Weglängenausgleich auch durch Überlagern der vorgegebenen Phasenverteilung mit entsprechenden Defokussierungs-Termen erfolgen.

In einer Weiterbildung einer solchen Konfiguration, bei der jeweils ein Eingangsumlenkelement verwendet wird, welches mit dem Ausgangsumlenkelement identisch ist, umfassen die Mittel zur Auswahl eines Selektionsbereichs mindestens ein zwischen einer Lichtquelle und dem phasenselektiven Element angeordnetes dichroitisches Strahlteilungselement, welches das einfallende Licht in mindestens einen reflektierten Teilstrahl und in einen transmittierten Teilstrahl zerlegt und das kombinierte Ein- und Ausgangsumlenkelement verkörpert.

Beispielsweise lassen sich drei Beleuchtungswellenlängen verwenden, wenn zwei Teilstrahlen reflektiert werden, was durch eine entsprechende Gestaltung des dichroitischen Strahlteilungselements erreicht werden kann. Bevorzugt ist es dann als planparallele Platte mit zwei parallelen Großflächen ausgebildet, auf die das einfallende Licht trifft. Auf der ersten Großfläche ist eine erste Farbteilerschicht und auf der zweiten Großfläche eine zweite Farbteilerschicht ausgebildet oder aufgebracht. Die beiden Farbteilerschichten wirken für unterschiedliche Beleuchtungswellenlängen oder Bereiche von Beleuchtungswellenlängen - letzteres ist bei einer sequenziellen Anordnung solcher Strahlteilungselemente von Vorteil - selektiv, d.h. reflexiv.

Diese Ausführung umfasst bevorzugt außerdem einen ersten Umlenkspiegel und einen zweiten Umlenkspiegel, wobei das phasenselektive Element zwischen den beiden Umlenkspiegeln positioniert ist. Dabei lenkt der erste Umlenkspiegel den mindestens einen reflektierten Teilstrahl auf das phasenselektive Element, der zweite Umlenkspiegel lenkt den transmittierten Teilstrahl auf das phasenselektive Element. Es können auch mehrere dichroitische Strahlteilungselemente in Reihe geschaltet werden, so dass sukzessive aus dem transmittierten und/oder reflektierten Strahl immer mehr Beleuchtungswellenlängen ausgekoppelt werden. Die Anordnung der Umlenkspiegel in Bezug auf das phasenselektive Element und das mindestens eine dichroitische Strahlteilungselement erfolgt dabei so, dass der erste Umlenkspiegel den vom phasenselektiven Element kommenden transmittierten Teilstrahl und der zweite Umlenkspiegel den vom phasenselektiven Element kommenden reflektierten Teilstrahl jeweils auf das mindestens eine dichroitische Strahlteilungselement zurücklenkt und auf diese Weise die Teilstrahlen im Strahlformungsmodul den gleichen optischen Weg zurücklegen. Dies lässt sich durch eine entsprechende Anordnung der Spiegel relativ zu dem phasenselektiven Element und dem Strahlteilungselement erreichen.

In einer weiteren Ausführung des Lichtblattmikroskops schließlich umfassen die Mittel zur Auswahl eines Selektionsbereichs ein zwischen einer Lichtquelle und dem phasenselektiven Element angeordnetes dispersives oder diffraktives optisches Element, welches Licht jeder der Beleuchtungswellenlängen in einem anderen Winkel umlenkt. Zwischen dem dispersiven oder diffraktiven optischen Element oder dem phasenselektiven optischen Element ist optional außerdem ein Abbildungselement angeordnet, wobei das diffraktive oder dispersive optische Element und das phasenselektive Element jeweils in oder in der Nähe einer Fokusebene des optionalen optischen Abbildungselements angeordnet sind, und wobei das phasenselektive Element das Licht unter Phasenmodifikation in das Abbildungselement reflektierend ausgestaltet ist. Anstelle des optionalen optischen Abbildungselements kann auch ein zweites diffraktives oder dispersives optisches Element verwendet werden, mit beiden lässt sich ein Strahlversatz zwischen ein- und austretendem Lichtstrahl erreichen.

Das dispersive optische Element kann beispielsweise ein Prisma sein, das diffraktive optische Element ein Gitter. Auch die Verwendung einer planparallelen Glasplatte ist möglich, wenn die Platte gegen die Richtung der einfallenden Lichtstrahlen gekippt angeordnet ist. Die Winkeldispersion beim Übergang von Luft in das Medium und beim Austritt aus dem dispersiven Medium wieder in Luft führt zu einem farbabhängigen Parallelversatz der Lichtstrahlen. Alternativ kann auch ein beweglicher Spiegel eine schnelle sequenzielle Aufspaltung erreichen. Durch das dispersive oder diffraktive optische Element wird Licht der Beleuchtungswellenlängen entsprechend seiner Farbe mit unterschiedlichen Winkeln beaufschlagt.

Wird ein optisches Abbildungselement verwendet, so wird das dispersive optische Element bzw. das diffraktive optische Element möglichst nah an oder in der Fokalebene des Abbildungselements - beispielsweise eines Hohlspiegels - angeordnet. Dementsprechend führt die Winkelaufspaltung nach Durchtreten des dispersiven oder diffraktiven optischen Elements zu einer Ortsaufspaltung der unterschiedlichen Farben. Das phasenselektive Element befindet sich ebenfalls möglichst nah an oder in einer Fokusebene des optischen Abbildungselements, so dass jede Farbe auf den entsprechenden Selektionsbereich fokussiert wird. Das phasenselektive Element wirkt in diesem Fall auch reflektierend und nach der Phasenmanipulation werden die Strahlen im Rücklauf wieder vereinigt. Um den eingehenden Strahl vom ausgehenden Strahl für jede Beleuchtungswellenlänge zu trennen, kann bevorzugt das phasenselektive Element verkippt zum optischen Pfad des einfallenden Lichts angeordnet sein, so dass im dispersiven oder diffraktiven optischen Element ein Strahlversatz für jede der Beleuchtungswellenlängen zwischen eingehendem und ausgehenden Strahl erzeugt wird. Alternativ kann auch - bei Verwendung einer zwischen phasenselektivem Element und optischen Abbildungselement angeordneten $\lambda/4$-Platte - die Änderung der Polarisationsrichtung und ein im Strahlengang angeordneter Polarisationsstrahlteiler, der zwischen den Lichtquellen und dem optischen dispersiven oder diffraktiven Element angeordnet ist, verwendet werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

## Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:

| | |
|---|---|
| Fig. 1 | die schematischen Aufbau eines invertierten Lichtblattmikroskops, |
| Fig. 2 | ein phasenselektives Element mit mehreren Selektionsbereichen, |
| Fig. 3 | den schematischen Aufbau eines Lichtblattmikroskops mit einem Strahlformungsmodul, |
| Fig. 4 | eine erste Ausgestaltung eines Strahlformungsmoduls, |
| Fig. 5a,b | andere Ausgestaltungen eines Strahlformungsmoduls, |
| Fig. 6a,b | weitere Ausgestaltungen eines Strahlformungsmoduls und |
| Fig. 7a,b | wieder andere Ausgestaltungen eines Strahlformungsmoduls. |

## Ausführliche Beschreibung der Zeichnungen

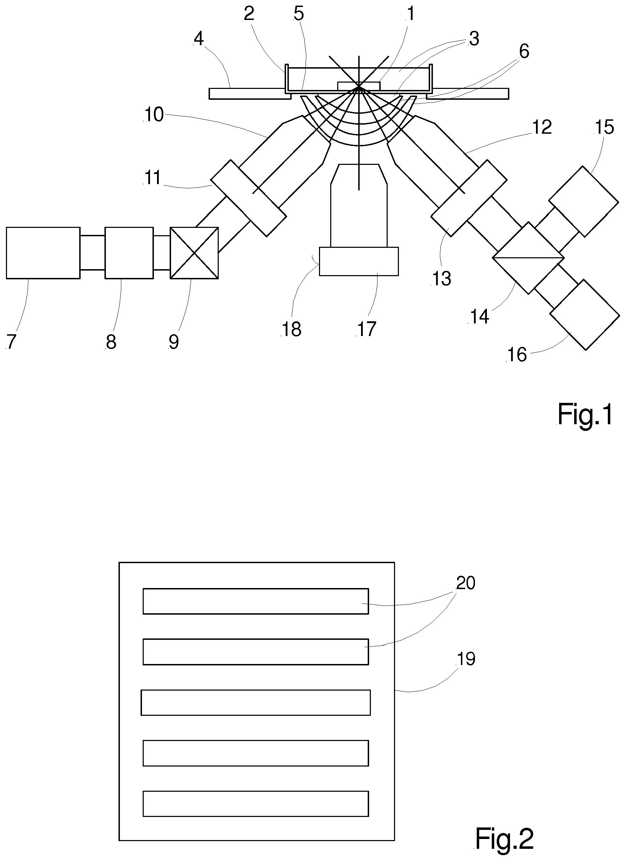

Fig. 1 zeigt zunächst den grundlegenden Aufbau eines Lichtblattmikroskops, welches zur lichtblattmikroskopischen Untersuchung einer Probe verwendet werden kann. Das Lichtblattmikroskop ist hier in einer inversen Konfiguration gezeigt, dies ist nur beispielhalft zu verstehen, auch Lichtblattmikroskope, bei denen die Probe von oben oder von der Seite betrachtet wird, sind mögliche Ausgestaltungen. Eine Probe 1 befindet sich in einer Probenkammer 2 und ist von einer Flüssigkeit 3, beispielsweise Wasser oder einer Nährlösung umgeben. Die Probenkammer 2 besitzt Seitenwände und einen Boden aus Glas vorgegebener Dicke, die Dicke entspricht dabei beispielsweise der eines üblichen Objektträgers, beispielsweise 0,17 mm. Die Probekammer 2 ist auf einem Probentisch 4 gelagert, der Probentisch ist in allen drei Raumrichtungen manuell oder motorisch verfahrbar. Die einzelnen Elemente des Lichtblattmikroskops sind unterhalb der Probenkammer 2, die über einen transparenten Boden 5 verfügt, angeordnet. Zwischen den Objektiven des Lichtblattmikroskops und dem Boden 5 der Probenkammer 2 befindet sich ein sogenanntes virtuelles *Relay* 6 mit einer inneren und einer äußeren Linse. Zwischen der inneren Linse des virtuellen *Relays* 6 und dem Boden 5 der Probenkammer befindet sich ebenfalls die Flüssigkeit 3. Zwischen der inneren und der äußeren Linse des virtuellen *Relays* 6 befindet sich die umgebende Atmosphäre, in der Regel Luft, ebenfalls zwischen der äußeren Linse des virtuellen *Relays* 6 und den Objektiven des Lichtblattmikroskops.

Das virtuelle *Relay* 6 dient dem Ausgleich von Aberrationen, die entstehen, weil die optischen Achsen des Beleuchtungs- und des Detektionsobjektivs nicht senkrecht zum Boden 5 der Probenkammer 2 stehen. Anstelle eines virtuellen *Relays* 6 können auch andere Korrekturmechanismen wie Vorschaltlinsen oder Freiformlinsen, die in die Objektive integriert sind, verwendet werden, falls es auf solch eine Korrektur ankommt.

Auf der linken Seite ist der Beleuchtungsstrahlengang dargestellt. Licht aus einem Beleuchtungsmodul, beispielsweise einem Lasermodul 7 - hier können beispielsweise mehrere Laser verschiedener Wellenlängen untergebracht sein und es kann zwischen verschiedenen Wellenlängen ausgewählt werden, wobei auch mehrere Wellenlängen gleichzeitig ausgewählt werden können - wird über ein Strahlformungsmodul 8 und ein Scanmodul 9 - welches beispielsweise zur Erzeugung eines quasi-statischen Lichtblatts und / oder zur Winkelabtastung verwendet werden kann - auf ein Beleuchtungsobjektiv 10 gelenkt, welches das Lichtblatt in die Lichtblattebene, die hier der optischen Achse des Beleuchtungsobjektivs enthält, in die Probe abgebildet. Der Fokus des Beleuchtungsobjektivs 10, d.h. die Stelle, an welcher das Lichtblatt die dünnste Ausdehnung hat, lässt sich mit Hilfe eines Antriebs, beispielsweise eines Piezoantriebs 11 verstellen. Alternativ kann auch der Probentisch 4 verfahren werden.

Auf der rechten Seite ist ein beispielhafter Detektionsstrahlengang abgebildet. Er umfasst ein Detektionsobjektiv 12, welches analog zum Beleuchtungsobjektiv 10 mittels eines Antriebs, hier eines Piezoantriebs 13 verstellt werden kann. Die optische Achse des Detektionsobjektivs 12 schließt mit der Lichtblattebene, in der die optische Achse des Beleuchtungsobjektivs 10 liegt, einen von Null verschiedenen, hier einen rechten Winkel ein. Dies ist jedoch nicht zwingend notwendig, damit das Verfahren funktioniert, reicht ein von Null verschiedener Winkel zwischen der Ebene des Lichtblattes und der optischen Achse des Detektionsobjektivs 12 aus. Durch das Detektionsobjektiv 12 wird von der Probe 1 emittiertes Fluoreszenzlicht über einen Strahlteiler 14 auf verschiedene Detektionsmodule 15 und 16 gelenkt. Bei der Beleuchtung der Probe simultan oder quasi-simultan mit einem mehrere Wellenlängen umfassenden Lichtblatt kann beispielsweise die Detektion nach Wellenlängen unterschiedlich vorgenommen werden. In den Detektionsmodulen 15, 16 befinden sich in der Regel flächenförmige Detektoren, die die Intensität registrieren und in ein entsprechendes elektrisches Signal umwandeln, welches dann in eine Bildverarbeitung einfließt. Die lichtblattmikroskopische Anordnung wird durch ein Übersichtsobjektiv 17, welches über einen Piezoantrieb 18 verfahrbar ist, abgerundet. Das Übersichtsobjektiv 17 dient dazu, zunächst ein Übersichtsbild der Probe zu erfassen und einen interessierenden Bereich (ROI) auszuwählen, auf den dann Beleuchtung und Detektion fokussiert werden können.

Fig. 2 zeigt ein phasenselektives Element 19. Diesem phasenselektiven Element 19 sind für verschiedene, zur Beleuchtung verwendete Beleuchtungswellenlängen vorgegebene Phasenverteilungen aufgeprägt. Diese Beleuchtungswellenlängen werden anhand der spezifischen Anforderungen für die Analyse ausgewählt, aus den Beleuchtungswellenlängen wird Beleuchtungslicht für die Probe 1 zusammengesetzt. Die Phasenverteilungen werden vorgegeben, indem in der Fokusebene des Beleuchtungsobjektivs 10 für ein Lichtblatt vorgegebener Form, dessen elektrisches Feld mit Licht der jeweiligen Beleuchtungswellenlänge bestimmt wird, und daraus die jeweils vorzugebende Phasenverteilung berechnet wird, wobei in einer Blendenebene ein mittlerer Bereich bezogen auf die Position des Lichtblatts ausgeblendet wird, so dass die Blendenstruktur die nullte Ordnung des strukturierten Lichts der jeweiligen Beleuchtungswellenlänge ausblendet.

Für jede Beleuchtungswellenlänge wird eine solche Phasenverteilung bestimmt. Jede der vorgegebenen Phasenverteilungen wird dem phasenselektiven Element 19 in einem eigenen, der jeweiligen Beleuchtungswellenlänge zugeordneten Selektionsbereich 20, welcher nicht mit den übrigen Selektionsbereichen 20 überlappt, aufgeprägt. Auf dem phasenselektiven Element 19 in Fig. 2 sind hier fünf solcher Selektionsbereiche 20 dargestellt, korrespondierend zu fünf möglichen Beleuchtungswellenlängen. Jede der Phasenverteilungen ist für die jeweilige Beleuchtungswellenlänge optimiert, d.h. der Phasenhub ist für diese Wellenlänge jeweils auf $\pi$ eingestellt und nur diese Wellenlänge wird bei der Bestimmung der Phasenverteilung berücksichtigt. Das phasenselektive Element 19 wird in oder in der Nähe einer Zwischenbildebene im Beleuchtungsstrahlengang mit Beleuchtungslicht beleuchtet, wobei auf jeden Selektionsbereich 20 nur Licht der jeweiligen Beleuchtungswellenlänge gelenkt wird und durch das phasenselektive Element strukturiert wird, bevor das Licht der verschiedenen Beleuchtungswellenlängen zu einem gemeinsamen Strahl vereinigt wird. Das so strukturierte Beleuchtungslicht wird in eine dem phasenselektiven Element nachgeordneten Blendenebene, in welcher ein Frequenzspektrum des Beleuchtungslichts der jeweiligen Beleuchtungswellenlänge erzeugt wird, abgebildet. Die Blendenstruktur wird dann vorzugsweise angepasst, so dass die nullten Ordnungen des strukturierten Beleuchtungslichts der jeweiligen Beleuchtungswellenlänge in der Blendenebene im Wesentlichen ausgeblendet werden, wodurch in einer Fokusebene des nachgeordneten Beleuchtungsobjektivs 10 ein strukturiertes Lichtblatt der jeweiligen Beleuchtungswellenlänge geformt wird, und zwar mit einer Lichtblattebene, die senkrecht zur Fokusebene des Beleuchtungsobjektivs 10 liegt. Die Probe 1 wird dann mit dem strukturierten Lichtblatt der jeweiligen Beleuchtungswellenlängen, also in der Regel einer Überlagerung mehrerer monochromatischer Lichtblätter, in der Lichtblattebene beleuchtet, die Beleuchtung kann für die verschiedenen Farben simultan oder aber auch quasi-simultan, d.h. in einem sehr schnellen Wechsel erfolgen. Von der Probe 1 abgestrahltes Licht wird in einer Detektionseinrichtung detektiert, wobei die Detektionsrichtung mit der Lichtblattebene einen von Null verschiedenen Winkel einschließt.

Als phasenselektive Elemente 19 lassen sich beispielsweise räumliche Lichtmodulatoren (SLM) verwenden. Auch die Verwendung einer oder mehrerer Phasenplatte mit fest aufgeprägten Phasenverteilungen ist möglich, da die Phasenmuster einmal für die jeweilige Wellenlänge optimiert werden und müssen dann nicht mehr verändert werden, so dass auch anstelle eines SLM fixe, auf einzelne Wellenlängen optimierte Phasenverteilungen, die auf eine Phasenplatte oder mehrere Phasenplatten aufgeprägt wurden, verwendet werden können. Die vorgegebene Strahlform kann beispielsweise ein $sinc^3$-Strahl, sein, aber auch Bessel-Strahlen und MathieuStrahlen lassen sich verwenden. Auch lassen sich kleine Phasenplatten als Einzelelemente, auf denen jeweils nur ein Selektionsbereich aufgeprägt ist, verwenden, die dann im Strahlengang untereinander, optional auch räumlich leicht versetzt zum Ausgleich beispielsweise von Wegunterschieden, angeordnet sind.

Ein schneller Wechsel zwischen den Beleuchtungswellenlängen oder eine simultane Beleuchtung mit mehreren Beleuchtungswellenlängen kann dann durch Anwählen des jeweiligen Musters im optischen Pfad erfolgen. Für jeden Selektionsbereich kann dann ein eigener Lichtweg etabliert werden, der beispielsweise - für eine schnelle sequenzielle Beleuchtung - mit einem schnellen optischen Schalter über einen beweglichen Spiegel angewählt wird. Alternativ lassen sich auch farbteilende optische Elemente verwenden, mit denen die Strahlwege in verschiedene Wege für verschiedene Farben aufgeteilt werden können. In letzterem Fall wird alleine über die Auswahl der Beleuchtungswellenlänge, die zur Anregung verwendet wird, der entsprechende Lichtpfad ausgewählt. Auch hier kann die Auswahl simultan oder sequenziell erfolgen. Die farbteilenden Elemente können beispielsweise dispersive oder diffraktive Elemente oder dichroitische Strahlteiler umfassen.

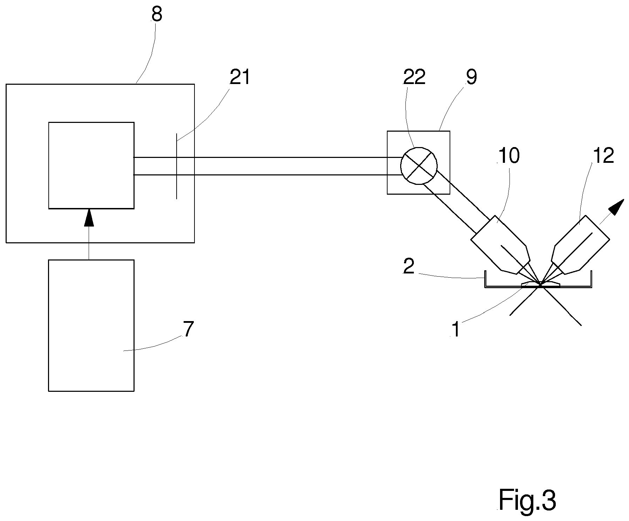

Fig. 3 zeigt noch einmal ein Lichtblattmikroskop in einer Übersicht mit den Elementen, von denen einige für die Strahlformung wesentlich sind. Hier ist das Lichtblattmikroskop in aufrechter Konfiguration gezeigt, im Unterschied zu Fig. 1. Mit dem Strahlformungsmodul 8 wird der Strahl wie gewünscht geformt und in eine Schnittstelle 21 abgebildet, die so liegt, dass dort die Fourier-Transformierte des gewünschten Strahls erzeugt wird. Diese kann dann beispielsweise mittels einer 4f-Abbildung auf einen Abtastspiegel 22 im Scanmodul 9 abgebildet werden. Der Abtastspiegel 22 wiederum wird in die Pupille des Beleuchtungsobjektivs 10 abgebildet, auf diese Weise kann durch eine schnelle Abtastbewegung das Lichtblatt in der Probe 1 aufgespannt werden. Die Detektion erfolgt wie üblich durch das hier im Wesentlichen senkrecht zum Lichtblatt orientierte Detektionsobjektiv 12. Im weiteren Verlauf kann eine Trennung der Farben und Mehrkanaldetektion, wie sie an sich im Stand der Technik bekannt ist, über Farbteiler und beispielsweise mehrere Kameras erfolgen, welche jeweils mit flächenförmigen Detektoren ausgestattet sind.

Das Lichtblattmikroskop umfasst auch eine Beleuchtungseinrichtung, welche hier ein Lasermodul 7 umfasst und generell für mehrere Beleuchtungswellenlängen kohärentes Beleuchtungslicht erzeugt. Das Lichtblatt wird aus Beleuchtungslicht im Strahlformungsmodul 8 erzeugt. Das Strahlformungsmodul 8 umfasst ein phasenselektives Element wie beispielsweise das phasenselektive Element 19 aus Fig. 2, auf welchem mehrere, voneinander räumlich getrennte Selektionsbereiche 20 angeordnet sind, wobei jeweils ein Selektionsbereich 20 einer spezifischen Beleuchtungswellenlänge zugeordnet ist. Jedem Selektionsbereich 20 ist eine für die jeweilige Beleuchtungswellenlänge vorgegebene Phasenverteilung aufgeprägt. Mittels des Beleuchtungsobjektivs 10 wird die Probe mit einem Lichtblatt beleuchtet, das Detektionsobjektiv 12 bildet Licht, welches von der Probe emittiert wird, auf einen flächenförmigen Detektor ab, wobei je nach Anzahl der Beleuchtungswellenlängen eine Strahlaufteilung in mehrere zu detektierende Farben erfolgen kann, wobei jedem Farbkanal ein solcher flächenförmiger Detektor zugeordnet ist. Die optische Achse des Detektionsobjektivs 12 schließt hier in Bezug auf Fig.3 einen rechten Winkel mit der optischen Achse des Beleuchtungsobjektivs 10 ein, da dies für die Beobachtungsbedingungen am günstigsten ist, es sind jedoch auch andere Konfigurationen möglich, bei denen der Winkel schmaler oder größer ist, sofern er nicht 0° oder 180° beträgt.

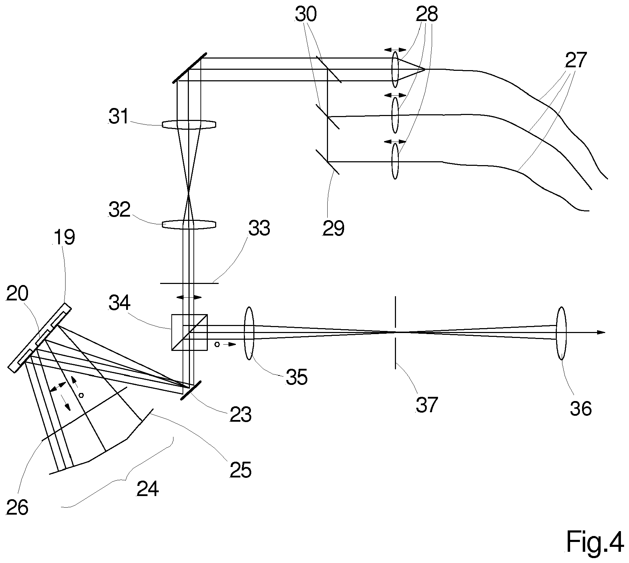

Das Strahlformungsmodul 8 umfasst insbesondere auch Mittel zur sequenziellen oder simultanen Auswahl der Selektionsbereiche 20, in Abhängigkeit von der jeweiligen Beleuchtungswellenlänge, d.h. auch Mittel zur spektralen Aufspaltung des Beleuchtungslichts vor der Phasenmanipulation, und Mittel zur anschließenden Vereinigung. Diese sollen anhand der folgenden Fig. 4-7 näher erläutert werden.

In einer Ausführung des Lichtblattmikroskops, welche vorwiegend für die sequenzielle Auswahl eines Selektionsbereichs 20 ausgelegt ist, umfassen die Mittel zur sequenziellen Auswahl und Beleuchtung eines solchen Selektionsbereichs 20 einen zwischen einer Lichtquelle, beispielsweise dem Lasermodul 7, und dem phasenselektiven Element 19 angeordnetes Lichtwegauswahlelement zur Umlenkung des Lichts in Abhängigkeit von der Beleuchtungswellenlänge auf den jeweiligen Selektionsbereich 20. Eine solche Ausgestaltung ist in Fig. 4 dargestellt. Zum schnellen sequenziellen Anwählen der vorgegebenen Phasenverteilungen in den Selektionsbereichen 20 auf dem phasenselektiven Element 19, beispielsweise einem SLM, wird hier ein Beleuchtungsabtastspiegel 23 verwendet, dieser verkörpert das Lichtwegauswahlelement. Er ist mit einer Steuereinheit gekoppelt, welche die Ausgänge der Laser schaltet, beispielsweise mit Hilfe akusto-optischer Elemente. Dem phasenselektiven Element 19 ist ein Segmentspiegel 24 aus mehreren Segmenten 25 nachgeordnet. Die Segmente 25 sind dabei als Planspiegelflächen ausgebildet, zur Bildung des Segmentspiegels 24 werden diese in vorgegebenen Winkeln zueinander angeordnet, wobei jeweils ein Segment 25 einer Beleuchtungswellenlänge zugeordnet ist, so dass das auf den Segmentspiegel 24 einfallende Licht wieder auf den der jeweiligen Beleuchtungswellenlänge zugeordneten Selektionsbereich 20 des phasenselektiven Elements 19 zurückgeworfen wird, wobei zuvor mittels Reflexion nur Licht aus dem jeweiligen Selektionsbereich 20 auf ein zugeordnetes Segment 25 gelenkt wurde.

Zwischen dem phasenselektiven Element 19 und dem Segmentspiegel 24 ist eine $\lambda/4$-Platte 26 angeordnet. Das phasenselektive Element 19 ist dabei so ausgebildet, dass es die Phase des Lichts bei einer ersten Polarisationsrichtung nicht modifiziert und bei einer zweiten, zur ersten senkrechten Polarisationsrichtung die Phase modifiziert. Dies setzt voraus, dass das eingestrahlte Licht entsprechend polarisiert ist, zudem muss das phasenselektive Element 19 entsprechend den Polarisationsrichtungen ausgerichtet sein.

Licht einzelner Laserlichtquellen 27 wird über Kollimatoren 28 in einen Strahl mit gaußförmigem Intensitätsprofil kollimiert. Über einen Spiegel 29 bzw. dichroitische Strahlteiler 30 wird das Licht der einzelnen Beleuchtungswellenlängen zusammengeführt und mittels eines Teleskops, welches zwei Zylinderlinsen 31 und 32 umfasst, in einer Achse verkleinert, so dass die Selektionsbereiche 20 mit den Phasenverteilungen optimal ausgeleuchtet werden. Die längere Seite der Selektionsbereiche 20 befindet sich dabei senkrecht zur Papierebene, d.h. die Lichtblattebene liegt ebenfalls senkrecht zur Papierebene. Anschließend wird das Licht der Beleuchtungswellenlängen mittels einer $\lambda/2$-Platte 33 so ausgerichtet, dass ein nachfolgender Polarisationsstrahlteiler 34 ungehindert passiert wird. Dies ist hier ohne Beschränkung der Allgemeinheit für eine Polarisation in der Blattebene dargestellt, gekennzeichnet durch den Doppelpfeil zwischen $\lambda/2$-Platte 33 und Polarisationsstrahlteiler 34 sowie zwischen phasenselektivem Element 19 und $\lambda/4$-Platte 26. Das phasenselektive Element 19 soll in diesem Fall so ausgerichtet sein, dass es sich passiv verhält, also für das vom Beleuchtungsabtastspiegel 23 kommende Licht reflexiv wirkt, ohne die Phase des Lichtes zu beeinflussen. Das Licht jeder Beleuchtungswellenlänge tritt durch das $\lambda/4$-Plättchen 26, wird von dem jeweiligen Segment 25 des Segmentspiegels 24 reflektiert und tritt abermals durch die $\lambda/4$-Platte 26, die auf diese Weise dafür sorgt, dass die Polarisation des Beleuchtungslichts beim zweiten Auftreffen auf das phasenselektive Element um 90° gedreht ist - gekennzeichnet durch den Kreis, der eine Polarisation senkrecht zur Blattebene symbolisieren soll - und die an diese Position befindliche Phasenverteilung im Selektionsbereich 20 nun auf das Licht wirkt. Auch die umgekehrte Reihenfolge, d.h. erst die Manipulation der Phase und nach Drehung der Polarisation im Rücklauf eine rein reflexiven Wirkung - sind denkbar. Die hier gezeigte Vorgehensweise hat jedoch den Vorteil, dass für die folgende Abbildung - das Beleuchtungslicht jeder der Beleuchtungswellenlängen passiert abermals den Beleuchtungsabtastspiegel 23, trifft auf den Polarisationsstrahlteiler 34, wo es aufgrund der geänderten Polarisationsrichtungen nun abgelenkt wird - eine Linse 35 mit kürzerer Brennweite verwendet werden kann, um das Phasenmuster aus der Zwischenbildebene abzubilden. Die Linse 35 erzeugt in der Ebene einer optionalen Blende 37 die Fourier-Transformierte des gewünschten Strahls. Die optionale Blende 37 kann verwendet werden, um unerwünschte Raumfrequenzen, die beispielsweise durch Beugung an den Pixeln eines SLM entstehen können, herauszufiltern. Durch sich daran anschließende 4f-Systeme, hier summarisch durch eine Linse 38 symbolisiert, kann das Frequenzspektrum auf einen Scanner und dann in die Pupille des Beleuchtungsobjektivs 10 abgebildet werden.

Chromatische Effekte in der Beleuchtung, d.h. auf dem optischen Weg zwischen den Kollimatoren 28 und dem phasenselektiven Element 19 können beispielsweise durch unterschiedliche Kollimationszustände ausgeglichen werden. Unterschiedliche optische Weglängen können beispielsweise durch optische Korrekturelemente ausgeglichen werden, oder durch Überlagern des strahlformenden Phasenmusters mit einem entsprechenden Defokussierungs-Term. Entsprechend der Stellung des Beleuchtungsabtastspiegels 23 können die Laserwellenlängen über eine Steuereinrichtung beispielsweise über akusto-optische Elemente im Lasermodul 7 geschaltet werden.

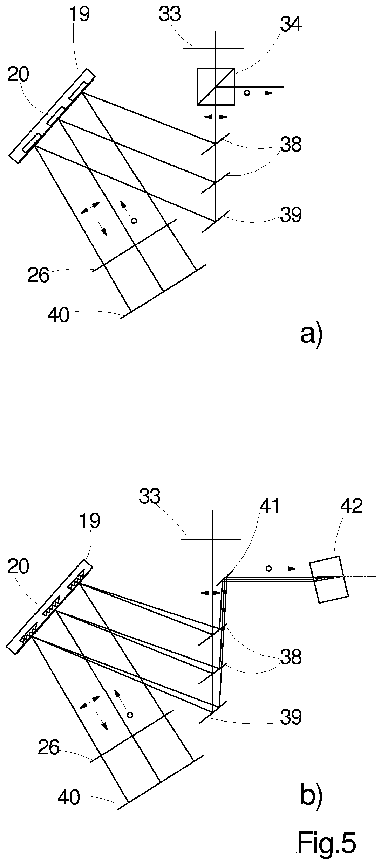

In einer anderen Ausführung, die im Zusammenhang mit Fig. 5 a), b) beschrieben wird, umfassen die Mittel zur simultanen Auswahl und folgender Beleuchtung eines Selektionsbereichs 20 ein oder mehrere, zwischen einer Lichtquelle und dem phasenselektiven Element 19 angeordnete, selektive Umlenkelemente. Jedes der Umlenkelemente ist jeweils einer Beleuchtungswellenlänge zugeordnet und lenkt Licht auf den jeweiligen Selektionsbereich 20. In diesem Beispiel werden drei Beleuchtungswellenlängen verwendet, es können aber auch mehr oder weniger sein. Diese Umlenkelemente sind bei dem in Fig. 5 a), b) gezeigten Beispiel als dichroitische Strahlteiler 38 ausgestaltet. Ein Spiegel 39 stellt sicher, dass zuvor nicht selektierte Wellenlängen ebenfalls dem phasenselektiven Element 19 zugeführt werden. Die Umlenkelemente werden hier beispielhaft nacheinander durchlaufen, so dass nach Durchtreten des zweiten Umlenkelements nur Licht einer Beleuchtungswellenlänge übrig ist und der Spiegel 39 ebenfalls als einer einzigen Beleuchtungswellenlänge zugeordnetes Umlenkelement wirkt. Anstelle des Spiegels 39 kann in jedem Fall auch ein Strahlteiler 38 verwendet werden, insbesondere wenn die Umlenkelemente im Strahlengang nicht hintereinander angeordnet sein sollten. Dem phasenselektiven Element 19 nachgeordnet ist ein Planspiegel 40 und eine $\lambda/4$-Platte 26 ist zwischen Planspiegel 40 und phasenselektivem Element 19 angeordnet. Analog zu der in Fig. 4 gezeigten Ausführung modifiziert das phasenselektive Element 19 die Phase des Lichts bei einer ersten Polarisationsrichtung nicht und bei einer zweiten, zur ersten senkrechten Polarisationsrichtung modifiziert es die Phase. Die Funktionsweisen und der Strahlverlauf ist bei der in Fig. 5 a) gezeigten Ausführung analog zu der bereits im Zusammenhang mit Fig. 4 beschriebenen Ausführung. Der Unterschied besteht darin, dass hier ein oder mehrere dichroitische Strahlteiler 38 und ein Spiegel 39 verwendet werden, um einen eigenen Lichtweg für jede vorgegebene Phasenverteilung, d.h. für jede Beleuchtungswellenlänge zu erzeugen. Die Polarisation wird mittels $\lambda/2$-Platte 33 so eingestellt, dass sich das phasenselektive Element 19, beispielsweise ein SLM, auf dem Hinweg passiv, d.h. nicht die Phasen beeinflussend verhält und nur als einfache Spiegel wirkt. Aufgrund der räumlichen Strahlteilung kann anstelle des Segmentspiegels 24 bei der in Fig. 5 a) und b) gezeigten Ausführung ein einfacher Planspiegel 40 verwendet werden. Die $\lambda/4$-Platte 26 sorgt für eine Drehung der Polarisation zwischen Hin- und Rückweg, d.h. vor dem zweiten Auftreffen auf das phasenselektive Element 19 für eine Drehung der Polarisation um 90°, wobei das an dieser Position befindliche Phasenmuster dann auf die Beleuchtung wirkt.

Bei der in Fig. 5 a) gezeigten Variante erfolgt die Auskopplung des Lichts, welches in das Beleuchtungsobjektiv 10 gelenkt werden soll, wieder durch einen Polarisationsstrahlteiler 34. Bei der in Fig. 5 b) gezeigten Ausführung wird der Phasenverteilung zusätzlich zum strahlformenden Phasenmuster ein Blaze-Gitter aufgeprägt, welches nur bei einer der beiden Polarisationsrichtungen, bevorzugt bei der gleichen Polarisationsrichtung wie das Phasenmuster, wirkt, also beispielsweise im Durchgang auf dem Rückweg. Dieses Blaze-Gitter führt zu einer zusätzlichen Winkelablenkung und damit zu einer räumlichen Trennung vom Anregungsstrahlengang - der Strahlengang zwischen phasenselektivem Element 19 und Beleuchtungsobjektiv 10 bzw. Probe 1 - und Beleuchtungsstrahlengang - der Teil des Strahlengangs, der sich zwischen dem Lasermodul 7 und dem phasenselektiven Elementen 19 befindet. Aufgrund der Trennung kann der Strahl durch einen weiteren Spiegel 41 anstelle durch den Polarisationsstrahlteiler 34 ausgekoppelt werden. Die durch die zusätzlichen Blaze-Terme, die den Phasenverteilungen aufgeprägt werden, entstehenden Winkelablenkungen können im weiteren Verlauf durch ein dispersives Element wieder zusammengeführt und überlagert werden. Bei gleicher zusätzlicher Winkelablenkung, wie in Fig. 5 b) dargestellt, ergibt sich ein Parallelversatz der Strahlen der Beleuchtungswellenlängen nach Reflexion am Spiegel 41, die Strahlen können beispielsweise durch eine gegenüber der Strahlrichtung verkippt, d.h. in einem von 90° verschiedenen Winkel angeordnete planparallele Glasplatte 42 wieder zusammengeführt werden. Prägt man den Phasenmustern hingegen für jede Beleuchtungswellenlänge den gleichen Blaze-Term auf, so erfolgt die Ablenkung aufgrund der gleichen Gitterkonstante bei verschiedenen Wellenlängen so, dass die zur Beleuchtung verwendeten, strukturierten Lichtstrahlen nach Verlassen des phasenselektiven Elements 19 leicht unterschiedliche Winkel haben. Das dispersive Element ist dann vorzugsweise als Prisma ausgestaltet.

Dabei ist es vorteilhaft, die Nutzstrahlung unterschiedlicher Beleuchtungswellenlängen zu überlagern, also einen gemeinsamen Lichtpfad zu erzeugen, da damit auch die Lichtblätter in der Probe überlagert werden und so räumlich und zeitlich simultan die gleichen Probenbereiche angeregt werden. Jedoch ist diese Überlagerung nicht zwingend erforderlich, insbesondere können Abweichungen, die sich nur in der Lichtblattebene manifestieren, toleriert werden.

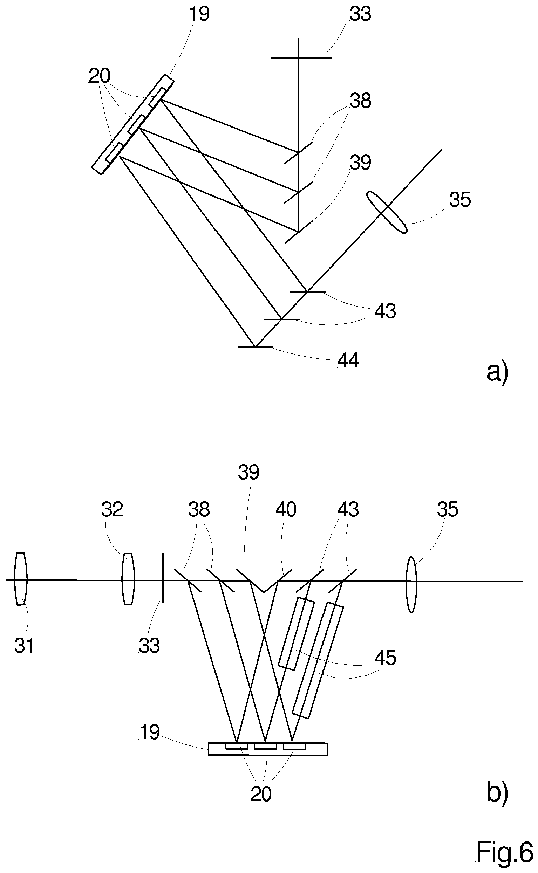

In einer weiteren Ausführung, die im Zusammenhang mit den Fig. 6 a) und b) beschrieben wird, umfassen die Mittel zur simultanen Auswahl eines Selektionsbereichs 20 ein oder mehrere zwischen einer Lichtquelle - zum Beispiel dem Lasermodul 7 - und dem phasenselektiven Element 19 angeordnete, selektive Eingangsumlenkelemente, wobei jedes der Eingangsumlenkelemente jeweils einer Beleuchtungswellenlänge zugeordnet ist und Licht auf den jeweiligen Selektionsbereich 20 lenkend angeordnet ist. Zur Strahlvereinigung umfasst das Strahlformungsmodul 8 wiederum ein oder mehrere, dem phasenselektiven Element 19 nachgeordnete, in Reihe angeordnete Ausgangsumlenkelemente. Auch jedes der Ausgangsumlenkelemente ist jeweils einer der Beleuchtungswellenlängen zugeordnet und lenkt Licht, welches aus dem jeweiligen Selektionsbereich 20 phasenmodifiziert reflektiert wird, um.

Im Gegensatz zu den vorangehend beschriebenen Anordnungen wird bei den in Fig. 6 a) und 6 b) beschriebenen Anordnungen auf die Verwendung eines Polarisationsstrahlteilers verzichtet, so dass das phasenselektive Element 19 nur einmal angelaufen werden muss. Dennoch benötigt das Licht eine definierte Polarisationsrichtung, die mittels der $\lambda/2$-Platte 33 hergestellt wird. Das phasenselektive Element 19 wird hier, ebenso wie in den anderen, im Zusammenhang mit den Figuren 4 und 5 beschriebenen Anordnungen jeweils in Bezug auf diese Polarisationsrichtung ausgerichtet. Grundsätzlich können alle Anordnungen zur simultanen Auswahl von Selektionsbereichen 20 selbstverständlich auch dazu benutzt werden, sequenziell einen Selektionsbereich 20 auszuwählen, falls dies erforderlich sein sollte. Auch bei den in Fig. 6 a) und 6 b) gezeigten Ausführungsbeispielen werden ein oder mehrere dichroitische Strahlteiler 38 verwendet, um unterschiedliche Lichtwege für die verschiedenen Beleuchtungswellenlängen bzw. Selektionsbereiche zu etablieren. Die Eingangsumlenkelemente werden also durch die dichroitischen Strahlteiler 38 realisiert. Ein Spiegel 39 stellt sicher, dass zuvor nicht selektierte Wellenlängen ebenfalls dem phasenselektiven Element 19 zugeführt werden. In Analogie zu Fig. 5a) und Fig. 5b) wirkt der Spiegel 39 hier aufgrund der beispielhaft gezeigten sequenziellen Anordnung ebenfalls als Eingangsumlenkelement, an seiner Stelle kann aber auch ein dichroitischer Strahlteiler 38 verwendet werden. Im Unterschied zu den in Fig. 5 a) und Fig. 5 b) gezeigten Anordnungen wird hier jedoch ein Satz von Ausgangsumlenkelementen verwendet, hier dichroitische Strahlteiler 43 und ein Spiegel 44, welche im Strahlengang dem phasenselektiven Element 19 nachgeordnet sind. Mit Hilfe der Ausgangsumlenkelemente, der dichroitischen Strahlteiler 43 und des Spiegels 44 wird wieder ein vereinigter Strahl aus Strahlen der hier beispielhaft verwendeten drei Beleuchtungswellenlängen erzeugt. Auf diese Weise kann auf den doppelten Durchgang über das phasenselektive Element 19 verzichtet werden, mögliche Restmodulationen, die auftreten können, wenn die Polarisationsdrehung nicht genau 90° beträgt, werden auf diese Weise vermieden. Die selektiven Eingangsumlenkelemente können identisch wie die Ausgangsumlenkelemente aufgebaut sein, oder bei entsprechender Strahlführung auch mit den Ausgangsumlenkelementen identisch sein. Insbesondere kann durch einen entsprechenden Aufbau mit zwei Umlenkspiegeln und einem dichroitischen Strahlteilungselement als kombiniertem Eingangs- und Ausgangsumlenkelement, welches zwei zueinander parallele Flächen aufweist, die jedoch mit verschiedenen Farbteilerschichten versehen sind, eine Aufspaltung von drei Beleuchtungswellenlängen erreicht werden, die alle den gleichen optischen Weg zurücklegen, wenn sich das phasenselektive Element (19) zwischen den beiden Umlenkspiegeln befindet.

Bei dem in Fig. 6 b) gezeigten Beispiel sind zusätzlich zwischen den phasenselektiven Element 19 und den Ausgangsumlenkelementen Ausgleichselemente 45 zum Ausgleich von Weglängenunterschieden zwischen Wegen des Lichts der einzelnen Beleuchtungswellenlängen angeordnet. Diese Ausgleichselemente 35 sind beispielsweise als einfache Glaskörper ausgebildet. Der Ausgleich kann aber auch durch Überlagerung des strahlformenden Phasenmusters mit einem entsprechenden Defokussierungs-Term erfolgen. Die in Fig. 6 b) gezeigte Variante ermöglicht auf diese Weise einen kompakten on-axis-Aufbau des Strahlformungsmoduls.

In einer weiteren Ausführung des Strahlformungsmoduls 8 des Lichtblattmikroskops umfassen die Mittel zur Auswahl eines Selektionsbereichs 20 ein zwischen einer Lichtquelle und dem phasenselektiven Element 19 angeordnetes, dispersives oder diffraktives optisches Element, welches Licht jeder der Beleuchtungswellenlängen in einen anderen Winkel umlenkt, sowie optional ein zwischen dem dispersiven oder diffraktiven optischen Element und dem phasenselektiven Element 19 angeordnetes optisches Abbildungselement, wobei das dispersive oder diffraktive optische Element und das phasenselektive Element 19 jeweils in oder in der Nähe einer Fokusebene des Abbildungselements angeordnet sind. Das phasenselektive Element 19 reflektiert das Licht unter Phasenmodifikation in das Abbildungselement zurück. Die Verwendung des Abbildungselements ist dabei nur fakultativ.

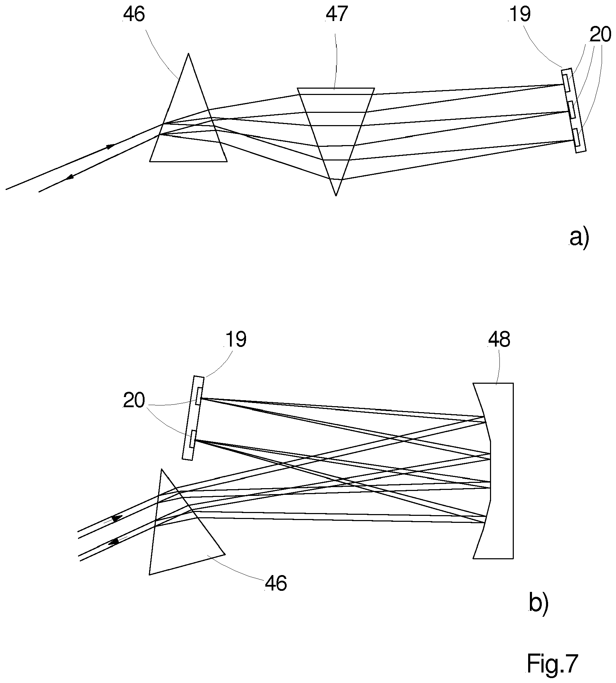

Diese Ausführung soll im Folgenden im Zusammenhang mit Fig. 7 a) und Fig. 7 b) näher erläutert werden. Hier wird die Etablierung eigener Strahlwege für jede der Farben, so dass das Licht der jeweiligen Beleuchtungswellenlänge nur auf den zugeordneten Selektionsbereich 20 auf den phasenselektiven Element 19 trifft, mit Hilfe zweier als Prismen 46 ausgestalteten dispersiven Elemente erreicht. Dabei wird zusätzlich ausgenutzt, dass die Strahlen unterschiedlicher Beleuchtungswellenlängen unterschiedliche optische Weglängen durchlaufen. Durch eine Verkippung des phasenselektiven Elements 19 im Strahlengang in Bezug auf den optischen Pfad des einfallenden Lichts wird beim Austritt auf dem rücklaufenden Weg aus dem Prisma 46 ein Strahlversatz erzeugt. Eine andere, einfache Möglichkeit besteht in der Verwendung einer planparallelen Glasplatte, wobei die Winkeldispersion beim Übergang von Luft in das Medium und beim Austritt aus dem dispersiven Medium zu einem farbabhängigen Parallelversatz der Strahlen führt. Auch die Verwendung eines diffraktiven optischen Elements anstelle eines Prismas, beispielsweise eines Gitters, ist denkbar und hat die gleiche Wirkung, in beiden Fällen handelt es sich um einen statischen Aufbau.

Bei der in Fig. 7 b) gezeigten Anordnung wird nur ein dispersives Element, ein Prisma 46 verwendet und zusätzlich ein zwischen den Prisma 46 und dem phasenselektiven Element 19 angeordnetes Abbildungselement, hier ein Hohlspiegel 48. Es handelt sich dabei um eine sogenannte 4f-Anordnung, d.h. der Ort der Winkelaufspaltung - die dem Hohlspiegel abgewandte Eintrittsfläche des Prismas - befindet sich in oder nahe einer Fokusebene des Hohlspiegels 48. Gleichermaßen befindet sich auch das phasenselektive Element 19 in oder in der Nähe einer Fokusebene des Hohlspiegels 48. Aufgrund der Platzierung des Prismas 46 - alternativ kann auch ein Gitter verwendet werden oder die Aufspaltung kann auch sequenziell beispielsweise mit Hilfe eines beweglichen Spiegels erfolgen - ergibt sich aus der Winkelaufspaltung nach Reflexion am Hohlspiegel 48 im Wesentlichen eine Ortsaufspaltung des Lichts der unterschiedlichen Beleuchtungswellenlängen. Aufgrund der Position des phasenselektiven Elements wird durch den Hohlspiegel 48 wieder Licht jeder Beleuchtungswellenlänge für sich in eine Richtung fokussiert, d.h. jeweils nur auf den zugehörigen Selektionsbereich 20 fokussiert. Nach der Phasenmanipulation am phasenselektiven Element 19, wo das Licht modifiziert reflektiert wird, werden die Strahlen auf dem Rückweg bis zu der dem Hohlspiegel 48 abgewandten Austrittsfläche des Prismas 46, welche der vorgenannten Eintrittsfläche entspricht - wieder vereinigt.

Um den eingehenden Strahl vom ausgehenden Strahl zu trennen, kann beispielsweise ein Ortsversatz gewählt werden, der hier durch einen Winkelversatz des phasenselektiven Elements 19 in der Papierebene realisiert wird. Der Ortsversatz kann allerdings auch senkrecht zur Papierebene erzeugt werden, alternativ kann auch eine Auftrennung gemäß Polarisationszustand vorgenommen werden, wie sie bereits im Zusammenhang mit Fig. 4 und Fig. 5 beschrieben wurde.

Mit den vorangehend beschriebenen Mitteln lassen sich mehrfarbige Lichtblätter erzeugen, wobei für jede der Farben das Lichtblatt bestmöglich hinsichtlich der Dicke und der Unterdrückung von Artefakten und der Strukturierung geformt ist. Bei gegebener Wellenlänge und numerischer Apertur des Beleuchtungsobjektivs 10 wird für jede Farbe ein Lichtblatt geringstmöglicher Dicke unter Ausnutzung der maximalen Beugungseffizienz des verwendeten phasenselektiven Elements 19 erzeugt.

## Bezuaszeichenliste

| 1 | Probe |
|---|---|
| 2 | Probenkammer |
| 3 | Flüssigkeit |
| 4 | Probentisch |
| 5 | transparenter Boden |
| 6 | virtuelles *Relay* |
| 7 | Lasermodul |
| 8 | Strahlformungsmodul |
| 9 | Scanmodul |
| 10 | Beleuchtungsobjektiv |
| 11 | Piezoantrieb |
| 12 | Detektionsobjektiv |
| 13 | Piezoantrieb |
| 14 | Strahlteiler |
| 15, 16 | Detektionsmodul |
| 17 | Übersichtsobjektiv |
| 18 | Piezoantrieb |
| 19 | phasenselektives Element |
| 20 | Selektionsbereich |
| 21 | Schnittstelle |
| 22 | Abtastspiegel |
| 23 | Beleuchtungsabtastspiegel |
| 24 | Segmentspiegel |
| 25 | Segment |
| 26 | $\lambda/4$-Platte |
| 27 | Laserlichtquelle |
| 28 | Kollimator |
| 29 | Spiegel |
| 30 | dichroitischer Strahlteiler |
| 31, 32 | Zylinderlinse |
| 33 | $\lambda/2$-Platte |

| 34 | Polarisationsstrahlteiler |
|---|---|
| 35, 36 | Linse |
| 37 | Blende |
| 38 | dichroitischer Strahlteiler |
| 39 | Spiegel |
| 40 | Planspiegel |
| 41 | Spiegel |
| 42 | Glasplatte |
| 43 | dichroitischer Strahlteiler |
| 44 | Spiegel |
| 45 | Ausgleichselement |
| 46, 47 | Prisma |
| 48 | Hohlspiegel |

**Patentansprüche**

1.  Lichtblattmikroskop, umfassend

    - eine Beleuchtungseinrichtung, welche für mehrere Beleuchtungswellenlängen kohärentes Beleuchtungslicht erzeugt,
    - ein Strahlformungsmodul (8) zur Erzeugung eines Lichtblatts aus Beleuchtungslicht,
    - ein Beleuchtungsobjektiv (10) zur Beleuchtung einer Probe (1) mit dem Lichtblatt,
    - ein Detektionsobjektiv (12) zur Abbildung von Licht, welches von der Probe emittiert wird, auf einen flächenförmigen Detektor, wobei die optische Achse des Detektionsobjektivs (12) mit der optischen Achse des Beleuchtungsobjektivs (10) einen von 0° und 180° verschiedenen Winkel einschließt, **dadurch gekennzeichnet, dass**
    - das Strahlformungsmodul (8) ein phasenselektives Element (19) umfasst, welches in oder in der Nähe einer Zwischenbildebene angeordnet ist und auf welchem mehrere, voneinander räumlich getrennte, Selektionsbereiche (20) angeordnet sind, wobei jeweils ein Selektionsbereich (20) einer spezifischen Beleuchtungswellenlänge zugeordnet ist, und wobei jedem Selektionsbereich (20) eine für die jeweilige Beleuchtungswellenlänge vorgegebene Phasenverteilung aufgeprägt ist, und
    - das Strahlformungsmodul (8) Mittel zur sequenziellen oder simultanen Auswahl der Selektionsbereiche (20) in Abhängigkeit von der jeweiligen Beleuchtungswellenlänge umfasst, wobei die Mittel zur Auswahl der Selektionsbereiche (20) Licht der jeweiligen Beleuchtungswellenlänge auf den zugeordneten Selektionsbereich (20) lenkend ausgebildet sind.

2.  Lichtblattmikroskop nach Anspruch 1, **dadurch gekennzeichnet, dass** das phasenselektive Element (19) als Baugruppe aus mehreren Einzelelementen zusammengesetzt ist, wobei jedes Einzelelement jeweils einer Beleuchtungswellenlänge zugeordnet ist.

3.  Lichtblattmikroskop nach Anspruch 1 oder 2, **dadurch gekennzeichnet, dass** die Mittel zur sequenziellen Auswahl eines Selektionsbereichs (20) einen zwischen einer Lichtquelle und dem phasenselektiven Element (19) angeordnetes Lichtwegauswahlelement zur Umlenkung des Lichts in Abhängigkeit von der Beleuchtungswellenlänge auf den jeweiligen Selektionsbereich (20), einen dem phasenselektiven Element (19) nachgeordneten Segmentspiegel (24) aus mehreren Segmenten (25), welcher das einfallende Licht auf den der Beleuchtungswellenlänge zugeordneten Selektionsbereich (20) des phasenselektiven Elements (19) zurückwirft, wobei jeweils ein Segment (25) einer Beleuchtungswellenlänge zugeordnet ist, und eine zwischen Segmentspiegel (24) und phasenselektivem Element (19) angeordnete λ/4-Platte (26) umfassen, wobei das phasenselektive Element (19) die Phase des Lichts bei einer ersten Polarisationsrichtung nicht modifizierend ausgestaltet ist und bei einer zweiten, zur ersten senkrechten Polarisationsrichtung die Phase modifizierend ausgestaltet ist.

4.  Lichtblattmikroskop nach Anspruch 1 oder 2, **dadurch gekennzeichnet, dass** die Mittel zur simultanen Auswahl eines Selektionsbereichs (20) mindestens ein zwischen einer Lichtquelle und dem phasenselektiven Element (19) angeordnetes, selektives Umlenkelement umfassen, wobei jedes der Umlenkelemente jeweils einer Beleuchtungswellenlänge zugeordnet ist und Licht auf den jeweiligen Selektionsbereich (20) lenkend angeordnet ist, einen dem phasenselektiven Element (19) nachgeordneten Planspiegel (40) und eine zwischen Planspiegel (40) und phasenselektivem Element (19) angeordnete λ/4-Platte (26) umfassen, wobei das phasenselektive Element (19) die Phase des Lichts bei einer ersten Polarisationsrichtung nicht modifizierend ausgestaltet ist und bei einer zweiten, zur ersten senkrechten Polarisationsrichtung die Phase modifizierend ausgestaltet ist.

5. Lichtblattmikroskop nach Anspruch 4, **dadurch gekennzeichnet, dass** jedem Selektionsbereich (20) ein Blaze-Gitter aufgeprägt ist, welches bei der zweiten Polarisationsrichtung den Ausfallswinkel des Lichts modifizierend ausgestaltet ist.

6. Lichtblattmikroskop nach einem der Ansprüche 1 oder 2, **dadurch gekennzeichnet, dass** die Mittel zur simultanen Auswahl eines Selektionsbereichs (20) mindestens ein, zwischen einer Lichtquelle und dem phasenselektiven Element (19) angeordnetes, selektives Eingangsumlenkelement umfassen, wobei jedes der Eingangsumlenkelemente jeweils einer Beleuchtungswellenlänge zugeordnet ist und Licht auf den jeweiligen Selektionsbereich (20) lenkend angeordnet ist, und zur Strahlvereinigung mindestens ein, dem phasenselektiven Element (19) nachgeordnetes Ausgangsumlenkelement umfassen, wobei jedes der Ausgangsumlenkelemente jeweils einer Beleuchtungswellenlänge zugeordnet ist und Licht aus dem jeweiligen Selektionsbereich (20) umlenkt.

7. Lichtblattmikroskop nach Anspruch 6, **dadurch gekennzeichnet, dass** zwischen dem phasenselektiven Element (19) und den Ausgangsumlenkelementen Ausgleichselemente (45) zum Ausgleich von Weglängenunterschieden zwischen Wegen des Lichts der einzelnen Beleuchtungswellenlängen angeordnet sind.

8. Lichtblattmikroskop nach einem der Ansprüche 1 oder 2, **dadurch gekennzeichnet, dass** die Mittel zur Auswahl eines Selektionsbereichs (20) mindestens ein zwischen einer Lichtquelle und dem phasenselektiven Element (19) angeordnetes dichroitisches Strahlteilungselement zur Zerlegung des einfallenden Lichts in mindestens einen reflektierten Teilstrahl und einen transmittierten Teilstrahl umfassen.

9. Lichtblattmikroskop nach Anspruch 8, **dadurch gekennzeichnet, dass** die Mittel zur Auswahl eines Selektionsbereichs (20) einen ersten Umlenkspiegel, welcher den mindestens einen reflektierten Teilstrahl auf das phasenselektive Element (19) umlenkt, und einen zweiten Umlenkspiegel, welcher den transmittierten Teilstrahl auf das phasenselektive Element umlenkt, wobei das phasenselektive Element (19) reflexiv ausgebildet und im Strahlengang zwischen den beiden Umlenkspiegeln positioniert ist, umfassen.

10. Lichtblattmikroskop nach Anspruch 8 oder 9, **dadurch gekennzeichnet, dass** das dichroitische Strahlteilungselement als planparallele Platte mit zwei parallelen Großflächen ausgebildet ist, wobei auf einer ersten Großfläche eine erste Farbteilerschicht und auf einer zweiten Großfläche eine zweite Farbteilerschicht aufgebracht ist, und wobei die beiden Farbteilerschichten für unterschiedliche Beleuchtungswellenlängen oder Bereiche für Beleuchtungswellenlängen reflexiv wirken.

11. Lichtblattmikroskop nach einem der Ansprüche 1 oder 2, **dadurch gekennzeichnet, dass** die Mittel zur Auswahl eines Selektionsbereichs ein zwischen einer Lichtquelle und dem phasenselektiven Element angeordnetes, dispersives oder diffraktives optisches Element, bevorzugt eine Glasplatte, ein Prisma (46) oder ein Gitter umfassen, welches Licht jeder der Beleuchtungswellenlängen in einen anderen Winkel umlenkt.

12. Lichtblattmikroskop nach Anspruch 11, umfassend ein zwischen dem dispersiven oder diffraktiven optischen Element und dem phasenselektiven Element (19) angeordnetes optisches Abbildungselement, bevorzugt einen Hohlspiegel (48), wobei das dispersive oder diffraktive optische Element und das phasenselektive Element (19) jeweils in der oder in der Nähe einer Fokusebene des optischen Abbildungselements angeordnet sind, wobei das phasenselektive Element (19) das Licht unter Phasenmodifikation in das optische Abbildungselement reflektierend ausgestaltet ist.

13. Lichtblattmikroskop nach Anspruch 12, **dadurch gekennzeichnet, dass** das phasenselektive Element (19) im Strahlengang verkippt zum optischen Pfad des einfallenden Lichts angeordnet ist, so dass im dispersiven oder diffraktiven optischen Element ein Strahlversatz für jede der Beleuchtungswellenlängen zwischen eingehendem und ausgehenden Strahl erzeugt wird.

14. Verfahren zur lichtblattmikroskopischen Untersuchung einer Probe (1), bei dem

- mehrere Beleuchtungswellenlängen ausgewählt werden, aus denen Beleuchtungslicht für die Probe (1) zusammengesetzt wird,
- wobei einem phasenselektiven Element (19) für jede der Beleuchtungswellenlängen eine vorgegebene Phasenverteilung aufgeprägt wird, wobei jede der vorgegebenen Phasenverteilungen dem phasenselektiven Element (19) in einem eigenen, der jeweiligen Beleuchtungswellenlänge zugeordneten Selektionsbereich (20), welcher nicht mit den übrigen Selektionsbereichen (20) überlappt, aufgeprägt wird,

- das phasenselektive Element (19) in oder in der Nähe einer Zwischenbildebene in einem Beleuchtungsstrahlengang mit Beleuchtungslicht beleuchtet wird, wobei auf jeden Selektionsbereich (20) nur Licht der jeweiligen Beleuchtungswellenlänge gelenkt wird und durch das phasenselektive Element (19) strukturiert wird, bevor das Licht der verschiedenen Beleuchtungswellenlängen zu einem gemeinsamen Strahl vereinigt wird,

- wodurch in einer Fokusebene des nachgeordneten Beleuchtungsobjektivs (10) ein strukturiertes Lichtblatt der jeweiligen Beleuchtungswellenlänge geformt wird, mit einer Lichtblattebene, die senkrecht zur Fokusebene des Beleuchtungsobjektivs (10) liegt,

- die Probe (1) mit den strukturierten Lichtblättern der jeweiligen Beleuchtungswellenlängen in der Lichtblattebene beleuchtet wird und von der Probe (1) abgestrahltes Licht in einer Detektionsrichtung detektiert wird, welche mit der Lichtblattebene einen von Null verschiedenen Winkel einschließt.

15. Verfahren nach Anspruch 14, **dadurch gekennzeichnet, dass** das elektrische Feld des Lichtblatts bestimmt wird, indem zur Formung des Lichtblatts mindestens zwei sinc$^3$-Strahlen in der Fokusebene des Beleuchtungsobjektivs (10) kohärent überlagert werden, und das sich in der Fokusebene ergebende elektrische Feld berechnet wird.

16. Verfahren nach Anspruch 14 oder 15, **dadurch gekennzeichnet, dass** das elektrische Feld des Lichtblatts bestimmt wird, indem zur Formung des Lichtblatts Besselstrahlen vorgegebener Form verwendet werden, das elektrische Feld eines solchen Besselstrahls in der Fokusebene bestimmt wird, und rechnerisch eine Überlagerung dieses elektrischen Feldes und identischer, jeweils um einen vorgegebenen Betrag $\Delta$ in der Fokusebene voneinander beabstandeter elektrischen Felder bestimmt wird.

17. Verfahren nach einem der Ansprüche 14 bis 16, **dadurch gekennzeichnet, dass** als phasenselektives Element (19) ein diffraktives optisches Element, bevorzugt ein räumlicher Lichtmodulator verwendet wird.

18. Verfahren nach einem der Ansprüche 14 bis 17, **dadurch gekennzeichnet, dass** das phasenselektive Element (19) als Baugruppe aus mehreren Einzelelementen zusammengesetzt wird, und jedes Einzelelement jeweils einen, einer Beleuchtungswellenlänge zugeordneten Selektionsbereich (20) umfasst.

19. Verfahren nach einem der Ansprüche 14 bis 18, **dadurch gekennzeichnet, dass** für jeden Selektionsbereich (20) in Abhängigkeit von der Beleuchtungswellenlänge die Modulationstiefe auf $\pi$ festgelegt wird.

20. Verfahren nach einem der Ansprüche 14 bis 19, **dadurch gekennzeichnet, dass** die Probe (1) mit den strukturierten Lichtblättern der jeweiligen Beleuchtungswellenlängen in der Lichtblattebene simultan oder sequenziell beleuchtet wird.

21. Verfahren nach einem der Ansprüche 14 bis 20, **dadurch gekennzeichnet, dass** das strukturierte Beleuchtungslicht in eine dem phasenselektiven Element (19) nachgeordnete Blendenebene, in welcher ein Frequenzspektrum des Beleuchtungslichts der jeweiligen Beleuchtungswellenlänge erzeugt wird, abgebildet wird und die Blendenstruktur angepasst wird, so dass die nullten Ordnungen des strukturierten Beleuchtungslichts der jeweiligen Beleuchtungswellenlänge in der Blendenebene im Wesentlichen ausgeblendet werden.

22. Verfahren nach einem der Ansprüche 14 bis 21, **dadurch gekennzeichnet, dass** einem phasenselektiven Element (19) für jede der Beleuchtungswellenlängen eine vorgegebene Phasenverteilung aufgeprägt wird, indem (i) in der Fokusebene eines Beleuchtungsobjektivs (10) für ein Lichtblatt vorgegebener Form dessen elektrisches Feld mit Licht der jeweiligen Beleuchtungswellenlänge bestimmt und daraus die jeweils vorzugebende Phasenverteilung berechnet wird, wobei in der Blendenebene ein mittlerer Bereich bezogen auf die Position des Lichtblatts ausgeblendet wird, so dass (iii) die Blendenstruktur die nullte Ordnung des strukturierten Lichts der jeweiligen Beleuchtungswellenlänge ausblendet.

## Claims

1. Light sheet microscope, comprising

   - an illumination apparatus, which generates coherent illumination light for several illumination wavelengths,
   - a beam-shaping module (8) for generating a light sheet from illumination light,

- an illumination objective (10) for the illumination of a specimen (1) with the light sheet,
- a detection objective (12) for imaging light which is emitted by the specimen onto a laminar detector, wherein the optical axis of the detection objective (12) forms an angle different from 0° and 180° with the optical axis of the illumination objective (10), **characterized in that**
- the beam-shaping module (8) comprises a phase-selective element (19) which is arranged in or near to an intermediate image plane and on which several selection areas (20) separated from each other spatially are arranged, wherein in each case one selection area (20) is assigned to one specific illumination wavelength, and wherein a phase distribution predefined for the respective illumination wavelength is impressed on each selection area (20), and
- the beam-shaping module (8) comprises means for the sequential or simultaneous selection of the selection areas (20) in dependence on the respective illumination wavelength, wherein the means for the selection of the selection areas (20) are formed to direct light of the respective illumination wavelength onto the assigned selection area (20).

2. Light sheet microscope according to claim 1, **characterized in that** the phase-selective element (19), as an assembly, is composed of several individual elements, wherein each individual element is in each case assigned to one illumination wavelength.

3. Light sheet microscope according to claim 1 or 2, **characterized in that** the means for the sequential selection of a selection area (20) comprise an optical path selection element for deflecting the light onto the respective selection area (20) in dependence on the illumination wavelength arranged between a light source and the phase-selective element (19), a segmented mirror (24) made up of several segments (25) arranged downstream of the phase-selective element (19), which reflects the incident light onto the selection area (20) of the phase-selective element (19) assigned to the illumination wavelength, wherein in each case one segment (25) is assigned to one illumination wavelength, and a λ/4 plate (26) arranged between segmented mirror (24) and phase-selective element (19), wherein the phase-selective element (19) is designed not to modify the phase of the light in the case of a first polarization direction and is designed to modify the phase in the case of a second polarization direction perpendicular to the first.

4. Light sheet microscope according to claim 1 or 2, **characterized in that** the means for the simultaneous selection of a selection area (20) comprise at least one selective deflecting element arranged between a light source and the phase-selective element (19), wherein each of the deflecting elements is assigned in each case to one illumination wavelength and is arranged to direct light onto the respective selection area (20), a plane mirror (40) arranged downstream of the phase-selective element (19) and a λ/4 plate (26) arranged between plane mirror (40) and phase-selective element (19), wherein the phase-selective element (19) is designed not to modify the phase of the light in the case of a first polarization direction and is designed to modify the phase in the case of a second polarization direction perpendicular to the first.

5. Light sheet microscope according to claim 4, **characterized in that** impressed on each selection area (20) is a blazed grating which is designed to modify the angle of reflection of the light in the case of the second polarization direction.

6. Light sheet microscope according to one of claims 1 or 2, **characterized in that** the means for the simultaneous selection of a selection area (20) comprise at least one selective input deflecting element arranged between a light source and the phase-selective element (19), wherein each of the input deflecting elements is assigned in each case to one illumination wavelength and is arranged to direct light onto the respective selection area (20), and, for beam combining, comprise at least one output deflecting element arranged downstream of the phase-selective element (19), wherein each of the output deflecting elements is assigned in each case to one illumination wavelength and deflects light out of the respective selection area (20).

7. Light sheet microscope according to claim 6, **characterized in that**, between the phase-selective element (19) and the output deflecting elements, compensating elements (45) are arranged for compensating for differences in path length between paths of the light of the individual illumination wavelengths.

8. Light sheet microscope according to one of claims 1 or 2, **characterized in that** the means for the selection of a selection area (20) comprise at least one dichroic beam-splitting element arranged between a light source and the phase-selective element (19) for separating the incident light into at least one reflected partial beam and one transmitted partial beam.

9. Light sheet microscope according to claim 8, **characterized in that** the means for the selection of a selection area (20) comprise a first deflecting mirror, which deflects the at least one reflected partial beam onto the phase-selective element (19), and a second deflecting mirror, which deflects the transmitted partial beam onto the phase-selective element, wherein the phase-selective element (19) is formed reflective and is positioned in the beam path between the two deflecting mirrors.

10. Light sheet microscope according to claim 8 or 9, **characterized in that** the dichroic beam-splitting element is formed as a plane-parallel plate with two parallel large areas, wherein a first colour-splitting layer is applied to a first large area and a second colour-splitting layer is applied to a second large area, and wherein the two colour-splitting layers act reflectively for different illumination wavelengths or ranges for illumination wavelengths.

11. Light sheet microscope according to one of claims 1 or 2, **characterized in that** the means for the selection of a selection area comprise a dispersive or diffractive optical element arranged between a light source and the phase-selective element, preferably a glass plate, a prism (46) or a grating, which deflects light of each of the illumination wavelengths at a different angle.

12. Light sheet microscope according to claim 11, comprising an optical imaging element arranged between the dispersive or diffractive optical element and the phase-selective element (19), preferably a concave mirror (48), wherein the dispersive or diffractive optical element and the phase-selective element (19) are each arranged in or near to a focal plane of the optical imaging element, wherein the phase-selective element (19) is designed to reflect the light into the optical imaging element with phase modification.

13. Light sheet microscope according to claim 12, **characterized in that** the phase-selective element (19) is arranged in the beam path tilted with respect to the optical path of the incident light, with the result that, in the dispersive or diffractive optical element, a beam displacement is generated between entering and exiting beam for each of the illumination wavelengths.

14. Method for examining a specimen (1) by means of light sheet microscopy, in which

   - several illumination wavelengths are selected, of which illumination light for the specimen (1) is composed,
   - wherein a predefined phase distribution is impressed on a phase-selective element (19) for each of the illumination wavelengths, wherein each of the predefined phase distributions is impressed on the phase-selective element (19) in its own selection area (20), assigned to the respective illumination wavelength, which does not overlap with the other selection areas (20),
   - the phase-selective element (19) is illuminated with illumination light in or near to an intermediate image plane in an illumination beam path, wherein only light of the respective illumination wavelength is directed onto each selection area (20) and structured by the phase-selective element (19) before the light of the different illumination wavelengths is combined to form a common beam,
   - whereby, in a focal plane of the downstream illumination objective (10), a structured light sheet of the respective illumination wavelength is shaped, with a light sheet plane which is perpendicular to the focal plane of the illumination objective (10),
   - the specimen (1) is illuminated with the structured light sheets of the respective illumination wavelengths in the light sheet plane and light emitted by the specimen (1) is detected in a detection direction which forms an angle different from zero with the light sheet plane.

15. Method according to claim 14, **characterized in that** the electric field of the light sheet is determined by coherently superimposing at least two sinc$^3$ beams in the focal plane of the illumination objective (10) to shape the light sheet, and calculating the electric field resulting in the focal plane.

16. Method according to claim 14 or 15, **characterized in that** the electric field of the light sheet is determined by using Bessel beams of predefined shape to shape the light sheet, determining the electric field of such a Bessel beam in the focal plane, and arithmetically determining a superimposition of this electric field and identical electric fields spaced apart from each other in each case by a predefined amount $\Delta$ in the focal plane.

17. Method according to one of claims 14 to 16, **characterized in that** a diffractive optical element, preferably a spatial light modulator, is used as phase-selective element (19).

18. Method according to one of claims 14 to 17, **characterized in that** the phase-selective element (19), as an assembly, is composed of several individual elements, and each individual element comprises in each case one selection area (20) assigned to an illumination wavelength.

19. Method according to one of claims 14 to 18, **characterized in that**, for each selection area (20), the modulation depth is fixed at $\pi$ in dependence on the illumination wavelength.

20. Method according to one of claims 14 to 19, **characterized in that** the specimen (1) is illuminated in the light sheet plane simultaneously or sequentially with the structured light sheets of the respective illumination wavelengths.

21. Method according to one of claims 14 to 20, **characterized in that** the structured illumination light is imaged into an aperture plane which is arranged downstream of the phase-selective element (19) and in which a frequency spectrum of the illumination light of the respective illumination wavelength is generated, and the aperture structure is adapted such that the zero orders of the structured illumination light of the respective illumination wavelength are substantially removed in the aperture plane.

22. Method according to one of claims 14 to 21, **characterized in that** a predefined phase distribution is impressed on a phase-selective element (19) for each of the illumination wavelengths, **in that** (i) in the focal plane of an illumination objective (10) for a light sheet of predefined shape, its electric field is determined with light of the respective illumination wavelength, and therefrom the phase distribution to be predefined in each case is calculated, wherein, in the aperture plane, a middle range based on the position of the light sheet is removed, with the result that (iii) the aperture structure removes the zero order of the structured light of the respective illumination wavelength.


**Revendications**

1. Microscope à feuille de lumière, comprenant

   - un appareil d'illumination qui génère une lumière d'illumination cohérente pour plusieurs longueurs d'onde d'illumination,
   - un module de mise en forme de faisceau (8) pour générer une feuille de lumière à partir d'une lumière d'illumination,
   - un objectif d'illumination (10) pour l'illumination d'un échantillon (1) avec la feuille de lumière,
   - un objectif de détection (12) pour imager la lumière qui est émise par l'échantillon sur un détecteur laminaire, dans lequel l'axe optique de l'objectif de détection (12) forme un angle différent de 0° et de 180° avec l'axe optique de l'objectif d'illumination (10), **caractérisé en ce que**
   - le module de mise en forme de faisceau (8) comprend un élément à sélection de phase (19) qui est agencé dans ou à proximité d'un plan d'image intermédiaire et sur lequel sont agencées plusieurs plages de sélection (20) spatialement séparées l'une de l'autre, dans lequel dans chaque cas une plage de sélection (20) est attribuée à une longueur d'onde d'illumination spécifique, et dans lequel une distribution de phases prédéfinie pour la longueur d'onde d'illumination respective est imprimée sur chaque plage de sélection (20), et
   - le module de mise en forme de faisceau (8) comprend des moyens pour le choix séquentiel ou simultané des plages de sélection (20) en dépendance de la longueur d'onde d'illumination respective, dans lequel les moyens pour le choix des plages de sélection (20) sont formés pour diriger la lumière de la longueur d'onde d'illumination respective sur la plage de sélection attribuée (20).

2. Microscope à feuille de lumière selon la revendication 1, **caractérisé en ce que** l'élément à sélection de phase (19), en tant qu'ensemble, est composé de plusieurs éléments individuels, dans lequel chaque élément individuel est attribué dans chaque cas à une longueur d'onde d'illumination.

3. Microscope à feuille de lumière selon la revendication 1 ou 2, **caractérisé en ce que** les moyens pour le choix séquentiel d'une plage de sélection (20) comprennent un élément à choix de trajet optique, pour faire dévier la lumière sur la plage de sélection respective (20) en dépendance de la longueur d'onde d'illumination, agencé entre une source lumineuse et l'élément à sélection de phase (19), un miroir segmenté (24) constitué de plusieurs segments (25) agencé en aval de l'élément à sélection de phase (19), qui réfléchit la lumière incidente sur la plage de sélection (20) de l'élément à sélection de phase (19) attribuée à la longueur d'onde d'illumination, dans lequel dans chaque cas un segment (25) est attribué à une longueur d'onde d'illumination, et une plaque $\lambda/4$ (26) agencée entre le miroir segmenté (24) et l'élément à sélection de phase (19), dans lequel l'élément à sélection de phase (19) est conçu pour ne pas modifier la phase de la lumière dans le cas d'un premier sens de polarisation et est conçu pour modifier

**EP 3 271 772 B1**

la phase dans le cas d'un deuxième sens de polarisation lequel est perpendiculaire au premier.

4. Microscope à feuille de lumière selon la revendication 1 ou 2, **caractérisé en ce que** les moyens pour le choix simultané d'une plage de sélection (20) comprennent au moins un élément déflecteur sélectif agencé entre une source lumineuse et l'élément à sélection de phase (19), dans lequel chacun des éléments déflecteurs est attribué dans chaque cas à une longueur d'onde d'illumination et est agencé pour diriger la lumière sur la plage de sélection respective (20), un miroir plan (40) agencé en aval de l'élément à sélection de phase (19) et une plaque λ/4 (26) agencée entre le miroir plan (40) et l'élément à sélection de phase (19), dans lequel l'élément à sélection de phase (19) est conçu pour ne pas modifier la phase de la lumière dans le cas d'un premier sens de polarisation et est conçu pour modifier la phase dans le cas d'un deuxième sens de polarisation lequel est perpendiculaire au premier.

5. Microscope à feuille de lumière selon la revendication 4, **caractérisé en ce que** sur chaque plage de sélection (20) est imprimé un réseau blazé qui est conçu pour modifier l'angle de réflexion de la lumière dans le cas du deuxième sens de polarisation.

6. Microscope à feuille de lumière selon l'une des revendications 1 ou 2, **caractérisé en ce que** les moyens pour le choix simultané d'une plage de sélection (20) comprennent au moins un élément de déflexion d'entrée sélectif agencé entre une source lumineuse et l'élément à sélection de phase (19), dans lequel chacun des éléments de déflexion d'entrée est attribué dans chaque cas à une longueur d'onde d'illumination et est agencé pour diriger la lumière sur la plage de sélection respective (20), et, pour la combinaison du faisceau, comprennent au moins un élément de déflexion de sortie agencé en aval de l'élément à sélection de phase (19), dans lequel chacun des éléments de déflexion de sortie est attribué dans chaque cas à une longueur d'onde d'illumination et fait dévier la lumière hors de la plage de sélection respective (20).

7. Microscope à feuille de lumière selon la revendication 6, **caractérisé en ce que**, entre l'élément à sélection de phase (19) et les éléments de déflexion de sortie, des éléments de compensation (45) sont agencés pour compenser les différences en longueur de trajet entre des trajets de la lumière des longueurs d'onde d'illumination individuelles.

8. Microscope à feuille de lumière selon l'une des revendications 1 ou 2, **caractérisé en ce que** les moyens pour le choix d'une plage de sélection (20) comprennent au moins un élément à division de faisceau dichroïque agencé entre une source lumineuse et l'élément à sélection de phase (19) pour séparer la lumière incidente dans au moins un faisceau partiel réfléchi et un faisceau partiel transmis.

9. Microscope à feuille de lumière selon la revendication 8, **caractérisé en ce que** les moyens pour le choix d'une plage de sélection (20) comprennent un premier miroir de déviation qui fait dévier l'au moins un faisceau partiel réfléchi sur l'élément à sélection de phase (19), et un deuxième miroir de déviation qui fait dévier le faisceau partiel transmis sur l'élément à sélection de phase, dans lequel l'élément à sélection de phase (19) est formé de manière réflexive et est positionné dans le trajet de faisceau entre les deux miroirs de déviation.

10. Microscope à feuille de lumière selon la revendication 8 ou 9, **caractérisé en ce que** l'élément à division de faisceau dichroïque est formé en tant que plaque parallèle dans le plan avec deux grandes aires parallèles, dans lequel une première couche à division de couleurs est appliquée à une première grande aire et une deuxième couche à division de couleurs est appliquée à une deuxième grande aire, et dans lequel les deux couches à division de couleurs agissent de manière réflexive pour différentes longueurs d'onde d'illumination ou gammes pour des longueurs d'onde d'illumination.

11. Microscope à feuille de lumière selon l'une des revendications 1 ou 2, **caractérisé en ce que** les moyens pour le choix d'une plage de sélection comprennent un élément optique à dispersion ou à diffraction agencé entre une source lumineuse et l'élément à sélection de phase, de préférence une plaque en verre, un prisme (46) ou une grille, qui fait dévier la lumière de chacune des longueurs d'onde d'illumination suivant un angle différent.

12. Microscope à feuille de lumière selon la revendication 11, comprenant un élément à imagerie optique agencé entre l'élément optique à dispersion ou à diffraction et l'élément à sélection de phase (19), de préférence un miroir concave (48), dans lequel l'élément optique à dispersion ou à diffraction et l'élément à sélection de phase (19) sont chacun agencés dans ou à proximité d'un plan focal de l'élément à imagerie optique, dans lequel l'élément à sélection de phase (19) est conçu pour réfléchir la lumière dans l'élément à imagerie optique avec une modification de phase.

13. Microscope à feuille de lumière selon la revendication 12, **caractérisé en ce que** l'élément à sélection de phase

22

(19) est agencé dans le trajet de faisceau de manière inclinée par rapport au trajet optique de la lumière incidente, le résultat étant que, dans l'élément optique à dispersion ou à diffraction, un déplacement de faisceau est généré entre un faisceau entrant et un faisceau sortant pour chacune des longueurs d'onde d'illumination.

14. Procédé pour examiner un échantillon (1) au moyen de la microscopie à feuille de lumière, dans lequel

- plusieurs longueurs d'onde d'illumination sont sélectionnées, à partir desquelles la lumière d'illumination pour l'échantillon (1) est composée,
- dans lequel une distribution de phases prédéfinie est imprimée sur un élément à sélection de phase (19) pour chacune des longueurs d'onde d'illumination, dans lequel chacune des distributions de phases prédéfinies est imprimée sur l'élément à sélection de phase (19) dans sa propre plage de sélection (20), attribuée à la longueur d'onde d'illumination respective, qui n'est pas en chevauchement avec les autres plages de sélection (20),
- l'élément à sélection de phase (19) est illuminé avec la lumière d'illumination dans ou à proximité d'un plan d'image intermédiaire dans un trajet de faisceau d'illumination, dans lequel seule la lumière de la longueur d'onde d'illumination respective est dirigée sur chaque plage de sélection (20) et est structurée par l'élément à sélection de phase (19) avant que la lumière des différentes longueurs d'onde d'illumination ne soit combinée pour former un faisceau commun,
- en vertu de quoi, dans un plan focal de l'objectif d'illumination aval (10), une feuille de lumière structurée de la longueur d'onde d'illumination respective est mise en forme, avec un plan de feuille de lumière qui est perpendiculaire au plan focal de l'objectif d'illumination (10),
- l'échantillon (1) est illuminé avec les feuilles de lumière structurées des longueurs d'onde d'illumination respectives dans le plan de la feuille de lumière et la lumière émise par l'échantillon (1) est détectée dans un sens de détection qui forme un angle différent de zéro avec le plan de la feuille de lumière.

15. Procédé selon la revendication 14, **caractérisé en ce que** le champ électrique de la feuille de lumière est déterminé par le fait de superposer de manière cohérente au moins deux faisceaux sinc$^3$ dans le plan focal de l'objectif d'illumination (10) pour mettre en forme la feuille de lumière, et par le fait de calculer le champ électrique résultant dans le plan focal.

16. Procédé selon la revendication 14 ou 15, **caractérisé en ce que** le champ électrique de la feuille de lumière est déterminé grâce à l'utilisation de faisceaux de Bessel ayant une forme prédéfinie pour mettre en forme la feuille de lumière, la détermination du champ électrique d'un tel faisceau de Bessel dans le plan focal, et la détermination arithmétique d'une superposition de ce champ électrique et de champs électriques identiques, espacés l'un de l'autre, dans chaque cas d'une ampleur prédéfinie $\Delta$ dans le plan focal.

17. Procédé selon l'une des revendications 14 à 16, **caractérisé en ce qu'**un élément optique à diffraction, de préférence un modulateur de lumière spatial, est utilisé en tant qu'élément à sélection de phase (19).

18. Procédé selon l'une des revendications 14 à 17, **caractérisé en ce que** l'élément à sélection de phase (19), en tant qu'ensemble, est composé de plusieurs éléments individuels, et chaque élément individuel comprend dans chaque cas une plage de sélection (20) attribuée à une longueur d'onde d'illumination.

19. Procédé selon l'une des revendications 14 à 18, **caractérisé en ce que**, pour chaque plage de sélection (20), la profondeur de modulation est fixée à $\pi$ en dépendance de la longueur d'onde d'illumination.

20. Procédé selon l'une des revendications 14 à 19, **caractérisé en ce que** l'échantillon (1) est illuminé dans le plan de la feuille de lumière de manière simultanée ou séquentielle avec les feuilles de lumière structurées des longueurs d'onde d'illumination respectives.

21. Procédé selon l'une des revendications 14 à 20, **caractérisé en ce que** la lumière d'illumination structurée est imagée dans un plan d'ouverture qui est agencé en aval de l'élément à sélection de phase (19) et dans lequel un spectre de fréquences de la lumière d'illumination de la longueur d'onde d'illumination respective est généré, et la structure d'ouverture est conçue de telle sorte que les ordres zéro de la lumière d'illumination structurée de la longueur d'onde d'illumination respective soient substantiellement enlevés dans le plan d'ouverture.

22. Procédé selon l'une des revendications 14 à 21, **caractérisé en ce qu'**une distribution de phases prédéfinie est imprimée sur un élément à sélection de phase (19) pour chacune des longueurs d'onde d'illumination, **en ce que** (i) dans le plan focal d'un objectif d'illumination (10) pour une feuille de lumière ayant une forme prédéfinie, son champ électrique est déterminé avec la lumière de la longueur d'onde d'illumination respective, et à partir de celui-ci est calculée la distribution de phases devant être prédéfinie dans chaque cas, dans lequel, dans le plan d'ouverture, une portée centrale basée sur la position de la feuille de lumière est enlevée, le résultat étant que (iii) la structure d'ouverture enlève l'ordre zéro de la lumière structurée de la longueur d'onde d'illumination respective.

Fig.1

Fig.2

8

21

22    9

10        12

2

1

7

Fig.3

Fig.4

a)

b)

Fig.5

Fig.6

46 47 19 20

a)

19 48

20

46

b)

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10257423 A1
- WO 20040535558 A1
- WO 2012110488 A1
- WO 2012122027 A1
- US 20130286181 A1
- WO 2014005682 A1
- DE 102014119255

**In der Beschreibung aufgeführte Nicht-Patentliteratur**

- **V. KETTUNEN et al.** Propagation-invariant spot arrays. *Optics Letters,* 1998, vol. 23 (16), 1247
- **ROHRBACH et al.** A line scanned light-sheet microscope with phase shaped self-reconstructing beams. *Optics Express,* 2010, vol. 18, 24229